# EUROPEAN PATENT SPECIFICATION

(11) **EP 3 178 575 B1**
(45) Date of publication and mention of the grant of the patent: **01.08.2018**
(21) Application number: 16201328.8
(22) Date of filing: 30.11.2016
(51) Int. Cl.: B09B 3/00, B09B 5/00, E03C 1/00, E03C 1/266

(54) **FOOD WASTE TREATMENT APPARATUS COMPRISING A BYPASS PIPE**
VORRICHTUNG ZUR BEHANDLUNG VON LEBENSMITTELABFÄLLEN MIT BYPASSROHR
APPAREIL DE TRAITEMENT DES DÉCHETS ALIMENTAIRES COMPORTANT UN TUYAU DE DÉRIVATION

(30) Priority: 01.12.2015 KR 20150169609
(43) Date of publication of application: 14.06.2017
(73) Proprietor: MUMS CO., Sejong-si 30001 (KR)
(72) Inventor: YI, Se Young, 16806 Gyeonggi-do (KR)
(74) Representative: Jeannet, Olivier

(56) References cited:
- WO-A1-03/066247
- WO-A1-2004/047995
- WO-A1-2005/061134
- WO-A1-2015/087360
- KR-A- 20120 134 896
- US-A- 3 823 879
- US-A1- 2005 109 687

## Description

### BACKGROUND OF THE INVENTION

### 1. Technical Field

The present invention relates generally to a food waste treatment apparatus having a bypass pipe formed therein and, more particularly, to a food waste treatment apparatus having a bypass pipe formed therein, which is capable of preventing a rise in the water level of the food waste treatment apparatus attributable to waste water because an inflow unit and the bottom of the food waste treatment apparatus are connected by a bypass pipe so that the waste water flowed through the inflow unit is transferred to the bottom of the food waste treatment apparatus.

### 2. Description of the Related Art

The present invention relates to a food waste treatment Different type of food waste treatment apparatuses are known, for example from documents US 2005/0109687 A1, WO 2005/061134 A1 or WO 2015/087360 A1.

Recently, due to the nationwide enforcement of the food waste meter-rate system and the prohibition of sea dumping according to the effectuation of the London Convention, nationwide local governments in Korea spend a budget of 1 trillion won on food waste treatment a year. The daily amount of food waste generated in Korea is 14,000 tons in 2012, which occupies 28.7 % of a total amount of waste generated. In order to solve such a problem, various food waste treatment methods have been developed and performed. Regarding an example of a technology, that is, the background of the present invention, as disclosed in Korean Patent Application Publication No. 10-0107524, a method for drying or freezing food is not a substantial method in that it includes secondary treatment for discharging waste left after primary treatment again.

A food waste pulverization method called a disposal method is widely used in the United States, etc., but is not suitable for a specific country. Such a method has problems in that a ditch needs to be illegally remodeled and the lifespan of a product is short.

A high-temperature microbe method is a method for producing food into compost using microbes, but is problematic in that a bad smell is generated and compost generated by such a method is not suitable for useful compost because food contains salt.

A liquid state microbe method, that is, the most recent method, is a method for making food waste extinct through agitation between the food waste and microbes and discharging the food waste in a liquid state. However, a food waste treatment apparatus using such a liquid state microbe method has a problem in that a user may be injured when the user puts his or her hand into the treatment apparatus because an agitator continues to operate when food waste or a microbe liquid is thrown into the treatment apparatus or when a cover is open for after service or food waste and a microbe liquid within the agitator may come outside.

Furthermore, there is a problem in that waste water flows backward if an inflow hole portion is clogged due to food waste because the food waste and the waste water are thrown into the treatment apparatus at the same time.

An example of a technology, that is, the background of the present invention, has been disclosed in Korean Patent Application Publication No. 10-0107524, but such technology does not propose a solution for the aforementioned problems.

### SUMMARY OF THE INVENTION

Accordingly, the present invention has been made keeping in mind the above problems occurring in the conventional art, and an object of the present invention is to provide a food waste treatment apparatus having a bypass pipe formed therein, which is capable of preventing a rise in the water level of the food waste treatment apparatus attributable to waste water because an inflow unit and the bottom of the food waste treatment apparatus are connected by a bypass pipe so that the waste water flowed through the inflow unit is transferred to the bottom of the food waste treatment apparatus.

In accordance with an aspect of the present invention, there is provided a food treatment apparatus for decomposing food waste using microbes, including a chamber formed in a box body form having an empty inside, wherein an inflow unit is formed at the top of the chamber, the inflow unit being fastened to the bottom of a sink drainage hole and food waste being received through the inflow unit, microbes of a liquid state are provided on an agitating net within the chamber, a plurality of perforations being formed in the agitating net, the food waste is decomposed by agitation between the received food waste by the rotation of agitating blades and microbes melting from the microbes of the liquid state, and a discharge unit is connected to a conduit pipe and is formed at the bottom of the chamber, waste water and a solid body which are results of the decomposition of the food waste being discharged from the discharge unit; a first hole formed by opening one side of the inflow unit; a second hole formed by opening one side at a lower portion of the chamber; and a bypass pipe adapted to connect the first hole and the second hole.

Furthermore, the food waste treatment apparatus may further include a microbe liquid supply unit including a container body in which the microbe liquid is stored and a container cover coupled to one end of the container body, a first inflow hole through which water is received, and a first outflow hole from which water or a microbe liquid are discharged being formed in the container cover; an external water supply unit including an external water tank disposed outside the chamber, a branch pipe by which water discharged by the external water tank is branched, a first valve adapted to receive the water from the branch pip and to supply the water to the first inflow hole, a second valve adapted to receive the water from the branch pipe and to supply the water to a fine particle water spraying device, and a third valve adapted to receive the water from the branch pipe and to supply the water to a high pressure spray device; a microbe liquid throwing unit disposed on one side of the chamber and including a first water supply pipe for transferring the water discharged by the first valve to the first inflow hole and a second water supply pipe for transferring the water or microbe liquid discharged by the first outflow hole to a second inflow hole formed in the water bottle; the water bottle formed in an empty box body form, the second inflow hole being formed on one side of the water bottle and a second outflow hole being formed on the other side of the water bottle; and a spray unit including a first spraying water supply device formed on an inside wall on one side of the chamber and configured to spray the water or a microbe liquid drained out from the second outflow hole toward the agitating net, the fine particle water spraying device formed on the inside wall on the other side of the chamber and configured to spray the water or a microbe liquid drained out from the second outflow hole toward the agitating net, and the high pressure spray device formed in a pipe form within the chamber and disposed under the agitating net and configured to remove food waste caught in the perforations of the agitating net by spraying externally supplied water toward the agitating net at a predetermined water pressure.

Furthermore, the food waste treatment apparatus may further include a first partition wall formed on one side of the inflow unit; a second partition wall formed on the other side of the inflow unit; a first rotation shaft formed to be orthogonal on one side of the first partition wall and the second partition wall, a first pulverization blade rotated by electric power from a first motor being formed on the first rotation shaft; and a second rotation shaft fixed to the first partition wall and the second partition wall, spaced apart from the first rotation shaft at a specific interval, and formed in parallel to the first rotation shaft, a second pulverization blade being formed on the second rotation shaft and engaged with the first pulverization blade.

Furthermore, the food waste treatment apparatus may further include a button unit formed on a front surface of the chamber, one or more buttons being formed in the button unit and a substrate unit configured to have one or more switches formed on a front surface of the substrate unit and configured to generate a specific signal corresponding to a specific switch when the specific switch corresponding to a specific button is pressed by pressing the specific button and to drive the chamber in response to the specific signal. The switches and the buttons are disposed to correspond to each other.

Furthermore, the food waste treatment apparatus may further includes a spraying water supply device formed in a pipe form within the chamber, disposed over the agitating net, and configured to spray externally supplied water or microbes on food waste inputted to the agitating net by spraying the water or microbes at a predetermined water pressure. Straight line-shaped or cross-shaped spray holes for spraying water are formed in one side of the spraying water supply device.

Furthermore, the food waste treatment apparatus may further include a microbe liquid supply unit including a container body in which the microbe liquid is stored and a container cover coupled to one end of the container body, a first inflow hole through which water is received, and a first outflow hole from which water or a microbe liquid are discharged being formed in the container cover; an electric heater pole inserted into the container body and configured to heat the microbe liquid for a predetermined time every predetermined time; a microbe liquid throwing unit disposed on one side of the chamber and configured to include a first valve for connecting an external water supply pipe and a first water supply pipe and supplying water, a first water supply pipe for transferring water discharged by the first valve to the first inflow hole, and a second water supply pipe for transferring water or a microbe liquid discharged by the first outflow hole to a second inflow hole formed in a water bottle; the water bottle formed in an empty box body form, the second inflow hole being formed on one side of the water bottle and a second outflow hole being formed on the other side of the water bottle; and a spray unit formed on an inside wall on one side of the chamber and configured to include a first spraying water supply device for spraying water or a microbe liquid discharged by the second outflow hole toward the agitating net.

Furthermore, the food waste treatment apparatus may further include a capsule type microbe liquid belonging to a liquid and including an oil film capsule, wherein the oil film capsule is burst by an external force generated by the rotation of the agitating blades and microbes within the oil film capsule are sprayed and agitated with the food waste; a microbe liquid supply unit including a container body in which the microbe liquid is stored and a container cover coupled to one end of the container body, a first inflow hole through which water is received, and a first outflow hole from which water or a microbe liquid are discharged being formed in the container cover; a microbe liquid throwing unit disposed on one side of the chamber and configured to include a first valve for connecting an external water supply pipe and a first water supply pipe and supplying water, a first water supply pipe for transferring water discharged by the first valve to the first inflow hole, and a second water supply pipe for transferring water or a microbe liquid discharged by the first outflow hole to a second inflow hole formed in a water bottle; the water bottle formed in an empty box body form, the second inflow hole being formed on one side of the water bottle and a second outflow hole being formed on the other side of the water bottle; and a spray unit formed on an inside wall on one side of the chamber and configured to include a first spraying water supply device for spraying water or a microbe liquid discharged by the second outflow hole toward the agitating net.

Furthermore, the food waste treatment apparatus may further include a microbe liquid supply unit including a container body in which the microbe liquid is stored and a container cover coupled to one end of the container body, a first inflow hole through which water is received, and a first outflow hole from which water or a microbe liquid are discharged being formed in the container cover; a microbe liquid throwing unit disposed on one side of the chamber and configured to include a first valve for connecting an external water supply pipe and a first water supply pipe and supplying water, a first water supply pipe for transferring water discharged by the first valve to the first inflow hole, and a second water supply pipe for transferring water or a microbe liquid discharged by the first outflow hole to a second inflow hole formed in a water bottle; the water bottle formed in an empty box body form, the second inflow hole being formed on one side of the water bottle and a second outflow hole being formed on the other side of the water bottle; a heating unit disposed inside or outside the water bottle and adapted to maintain a constant temperature by applying heat to water or a microbe liquid received from the second inflow hole through a heating pad for generating heat for a predetermined time every predetermined time; and a spray unit formed on an inside wall on one side of the chamber and configured to include a first spraying water supply device for spraying water or a microbe liquid discharged by the second outflow hole toward the agitating net.

Furthermore, the chamber may include an agitating shaft to which a plurality of the agitating blades is fixed at a right angle, an agitating motor connected to one end of the agitating shaft to rotate an agitating shaft, a temperature sensor configured to generate temperature measurement data by measuring a temperature of the agitating motor and to send the temperature measurement data to an agitating motor control unit, and a control unit configured to control the agitating motor. The control unit may include the agitating motor control unit configured to drive the agitating motor by sending an agitating motor operation signal to the agitating motor, receive the temperature measurement data from the temperature sensor, and control an RPM of the agitating motor based on results of the temperature measurement.

Furthermore, the chamber may include a valve unit including a first valve, a second valve and a third valve and configured to spray water at a predetermined water pressure and a control unit configured to control an agitating motor and the valve unit. The control unit may include an agitating motor control unit configured to drive the agitating motor and control an RPM of the agitating motor by sending an agitating motor operation signal to the agitating motor; a valve unit control unit configured to drive the valve unit and control water pressure of the valve unit by sending a valve unit operation signal to the valve unit; an agitating motor data storage unit configured to previously store a history in which the agitating motor operation signal has been transmitted from the agitating motor control unit to the agitating motor and a history in which the RPM of the agitating motor has been controlled as agitating motor data according to a set time zone; a valve unit data storage unit configured to previously store a history in which the valve unit operation signal has been transmitted from the valve unit control unit to the valve unit and a history in which the water pressure of the valve unit has been controlled as valve unit data according to a set time zone; and an abnormality determination unit configured to compare an operating state of the agitating motor with the agitating motor data, determine that abnormality has occurred in the agitating motor if, as a result of the comparison, the operating state of the agitating motor is found to be not identical with the agitating motor data, send an agitating motor stop signal to the agitating motor control unit so that the operation of the agitating motor is stopped, compare an operating state of the valve unit with the valve unit data, determine that abnormality has occurred in the valve unit if, as a result of the comparison, the operating state of the valve unit is found to be not identical with the valve unit data, and send a valve unit stop signal to the valve unit control unit so that the operation of the valve unit is stopped.

Furthermore, the chamber may include an agitating shaft to which a plurality of the agitating blades is fixed at a right angle and an agitating motor connected to one end of the agitating shaft to rotate an agitating shaft. The control unit may include an agitating motor control unit configured to drive the agitating motor and control an RPM of the agitating motor by sending an agitating motor operation signal to the agitating motor; a valve unit control unit configured to drive the valve unit and control water pressure of the valve unit by sending a valve unit operation signal to the valve unit; an agitating motor data storage unit configured to previously store a history in which the agitating motor operation signal has been transmitted from the agitating motor control unit to the agitating motor and a history in which the RPM of the agitating motor has been controlled as agitating motor data according to a set time zone; and a valve unit data storage unit configured to previously store a history in which the valve unit operation signal has been transmitted from the valve unit control unit to the valve unit and a history in which the water pressure of the valve unit has been controlled as valve unit data according to a set time zone.

Furthermore, the food waste treatment apparatus may further include a control unit configured to control an operation of the food waste treatment apparatus. The control unit may include a communication unit configured to receive firmware update data from a firmware update server and a firmware module configured to store firmware data for controlling the food waste treatment apparatus and to update existing firmware data with firmware update data when the firmware update data is received from the firmware update server through the communication unit. The firmware update server sends the firmware update data to the firmware module through the communication unit.

Furthermore, the food waste treatment apparatus may further include a spraying water supply device formed in a pipe form within the chamber, disposed over the agitating net, and configured to spray externally supplied water or microbes on food waste inputted to the agitating net by spraying the water or microbes at a predetermined water pressure. The spraying water supply device may be formed in a cylindrical shape. A circular spray hole may be formed at the center on a top surface of the spraying water supply device, and an inside wall on the top surface and an inside wall on a side may form a tilt angle.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram showing a food waste treatment apparatus having a bypass pipe formed therein according to an embodiment of the present invention.
FIG. 2 is a cross-sectional view of the food waste treatment apparatus having a bypass pipe formed therein according to an embodiment of the present invention.
FIG. 3 is a diagram showing the chamber of a food waste treatment apparatus having a bypass pipe formed therein according to an embodiment of the present invention.
FIG. 4 is a diagram showing the inside of the chamber of the food waste treatment apparatus having a bypass pipe formed therein according to an embodiment of the present invention.
FIG. 5 is a diagram showing the bottom of the outside of the chamber of the food waste treatment apparatus having a bypass pipe formed therein according to an embodiment of the present invention.
FIG. 6 is a diagram showing the inflow unit and second inclined portion of the food waste treatment apparatus having a bypass pipe formed therein according to an embodiment of the present invention.
FIG. 7 is a perspective view showing the inflow unit of the food waste treatment apparatus having a bypass pipe formed therein according to an embodiment of the present invention.
FIG. 8 is a perspective view showing the lower end portion of the chamber from which an agitating net has been removed in the food waste treatment apparatus having a bypass pipe formed therein according to an embodiment of the present invention.
FIG. 9 is a perspective view showing the lower end portion of the chamber from which the agitating net has been removed in the food waste treatment apparatus having a bypass pipe formed therein according to an embodiment of the present invention.
FIG. 10 is a diagram showing an example of a flow of waste water in the food waste treatment apparatus having a bypass pipe formed therein according to an embodiment of the present invention.
FIG. 11 is a perspective view showing the sprayer of the food waste treatment apparatus having a bypass pipe formed therein according to an embodiment of the present invention.
FIG. 12 is a perspective view showing the agitating blade of the food waste treatment apparatus having a bypass pipe formed therein according to an embodiment of the present invention.
FIG. 13 is a perspective view showing the spray holes of the sprayer in the food waste treatment apparatus having a bypass pipe formed therein according to an embodiment of the present invention.
FIGS. 14 and 15 are cross-sectional views of the spraying water supply device of the food waste treatment apparatus having a bypass pipe formed therein according to an embodiment of the present invention.
FIG. 16 is a plan view of a pulverizer of the food waste treatment apparatus having a bypass pipe formed therein according to a first embodiment of the present invention.
FIGS. 17 and 18 are cross-sectional views of a pulverizer of the food waste treatment apparatus having a bypass pipe formed therein according to a second embodiment of the present invention.
FIG. 19 is an exemplary diagram showing the spraying of water supplied from the outside in the food waste treatment apparatus having a bypass pipe formed therein according to an embodiment of the present invention.
FIG. 20 is a diagram showing a microbe capsule in the food waste treatment apparatus having a bypass pipe formed therein according to an embodiment of the present invention.
FIG. 21 is a block diagram of the food waste treatment apparatus according to an embodiment of the present invention.

**<Description of reference numerals>**

| | |
|---|---|
| 10: food waste treatment apparatus | |
| 11: housing | 100: chamber |
| 102: bottom unit | 104: waterspout unit |
| 120: agitating motor | 122: agitating blade |
| 124: agitating shaft | 126: agitating net |
| 127: perforation | 130: valve unit |
| 132: first valve | 134: second valve |
| 136: third valve | 140: output unit |
| 142: cultivation mode switch | |
| 144: sleep mode switch | |
| 150: temperature sensor | 160: inflow unit |
| 161: throwing hole | 162: first inclined portion |
| 163 inflow hole | 164: screw thread |
| 165: inflow hole | 166: second inclined portion |
| 167: discharge unit | |
| 168: discharge unit opening and shutting valve | |
| 1602: third partition wall | |
| 1604: first partition wall | |
| 1606: second partition wall | |
| 1608: fourth partition wall | |
| 1612: second motor | 1614: second rotation shaft |
| 1616: second pulverization blade | |
| 1618: spring members | |
| 1622: first motor | 1624: first rotation shaft |
| 1626: first pulverization blade | |
| 1636a: insertion surface | |
| 1636b, 1636c: transfer surface | |
| 170: bypass pipe formed | 172: first hole |
| 174: second hole | 180: spray unit |
| 181: spray holes | |
| 182: first spraying water supply device | |
| 183: side spray hole | |
| 184: second spraying water supply device | |
| 185: circular spray hole | |
| 186: fine particle water spraying device | |
| 187a: side inside wall | 187b: top inside wall |
| 188: high pressure spray device | |
| 190: water bottle | 192: second inflow hole |
| 196: second outflow hole | 198: heating device |
| 200: microbe liquid supply unit | 210: container body |
| 212: electric heater pole | 220: container cover |
| 222: first outflow hole | |
| 223: second water supply pipe | |
| 224: first inflow hole | |
| 225: first water supply pipe | |
| 300: capsule type microbe liquid | |
| 310: oil film capsule | |
| 320: specific section | 330: microbe |
| 1000: control unit | |
| 1100: agitating motor control unit | |
| 1120: agitating motor data storage unit | |
| 1200: valve unit control unit | |
| 1220: valve unit data storage unit | |
| 1300: abnormality determination unit | |
| 1400: memory unit | 1500: firmware module |
| 1600: communication unit | 2000: user terminal |
| 2100: terminal output unit | 2200: terminal input unit |
| 3000: firmware update server | |

### DESCRIPTION OF THE PREFERRED EMBODIMENTS

The merits and characteristics of the present invention and the methods for achieving the merits and characteristics thereof will become more apparent from the following embodiments taken in conjunction with the accompanying drawings.

The present invention is defined by the claims.

Hereinafter, a food waste treatment apparatus having a bypass pipe formed therein is described with reference to the accompanying drawings in connection with some embodiments.

The present invention relates to a food treatment apparatus for decomposing food waste using microbes.

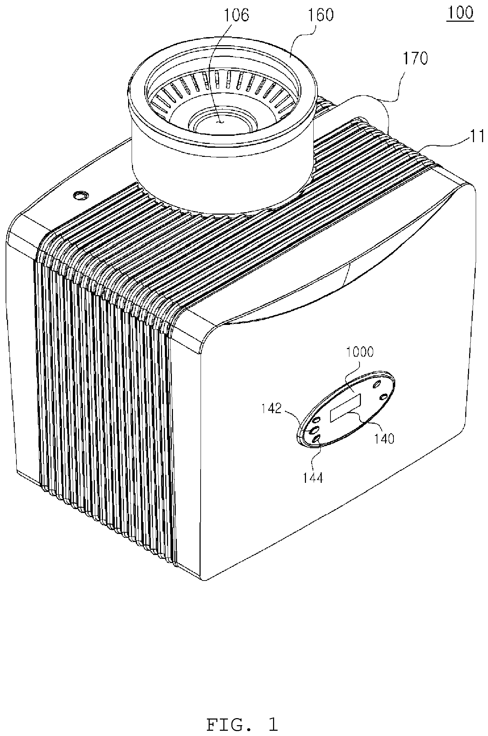

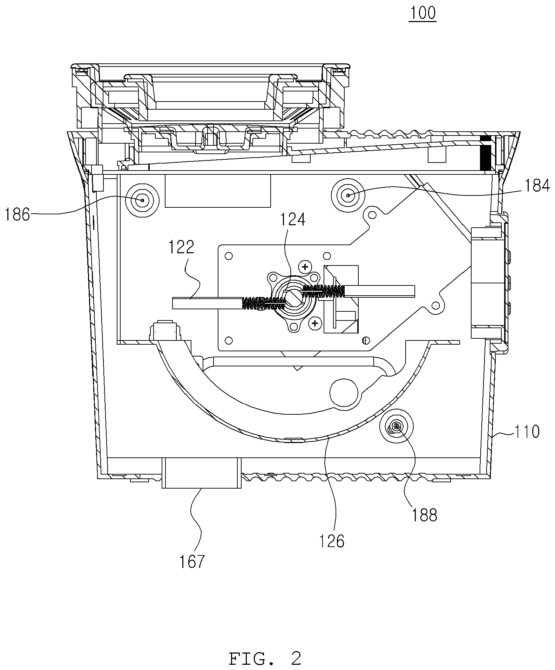

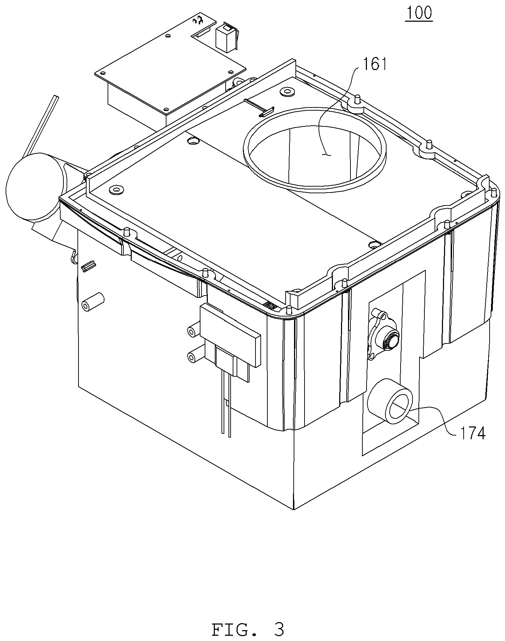

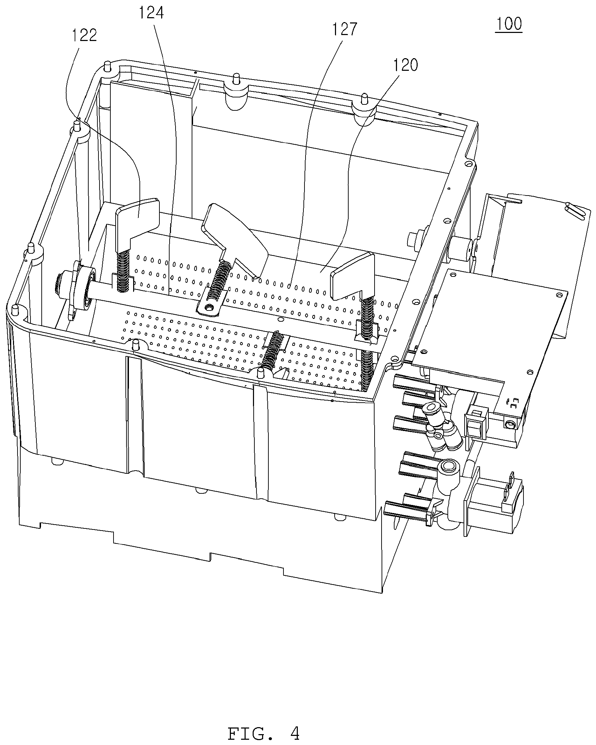

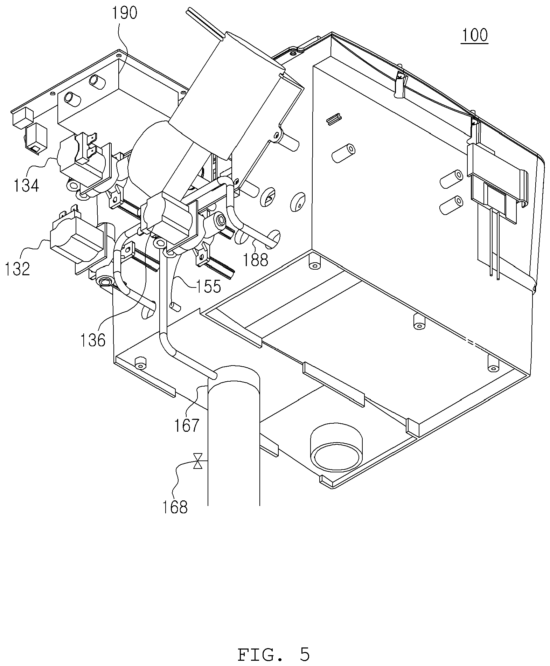

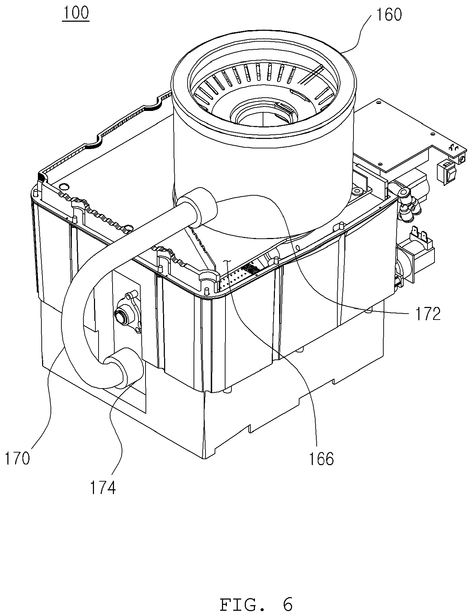

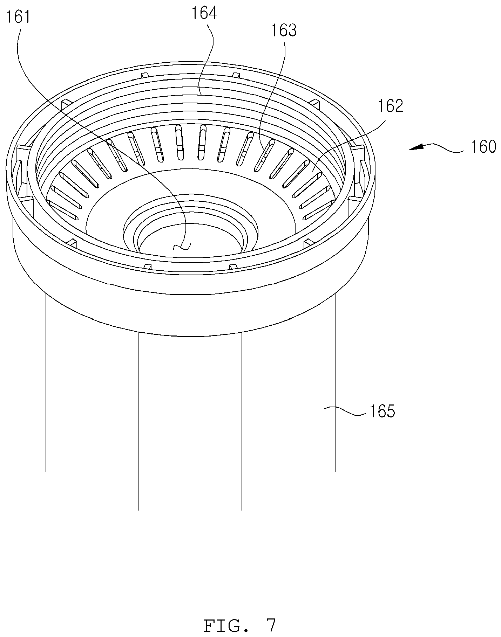

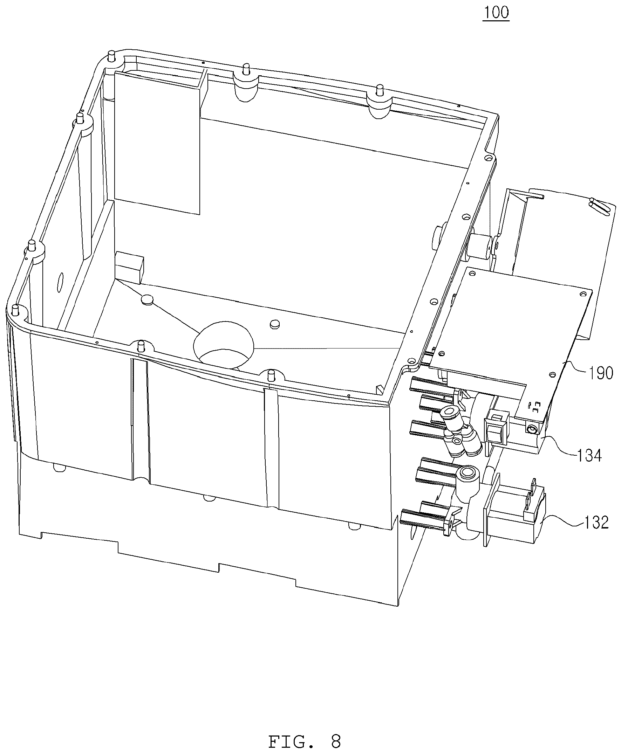

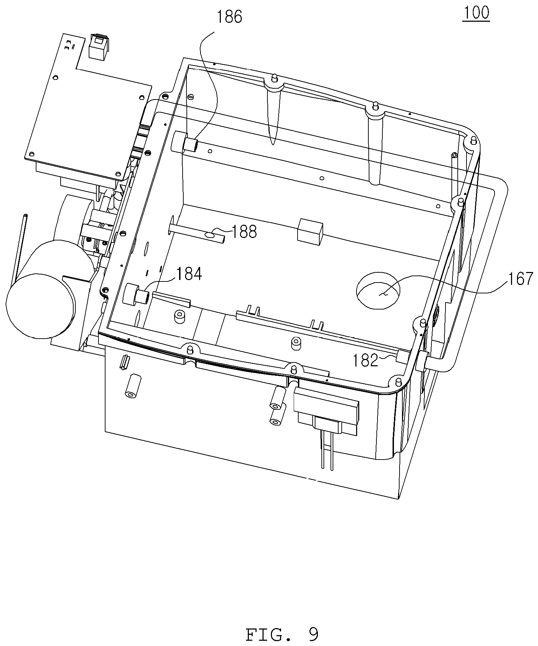

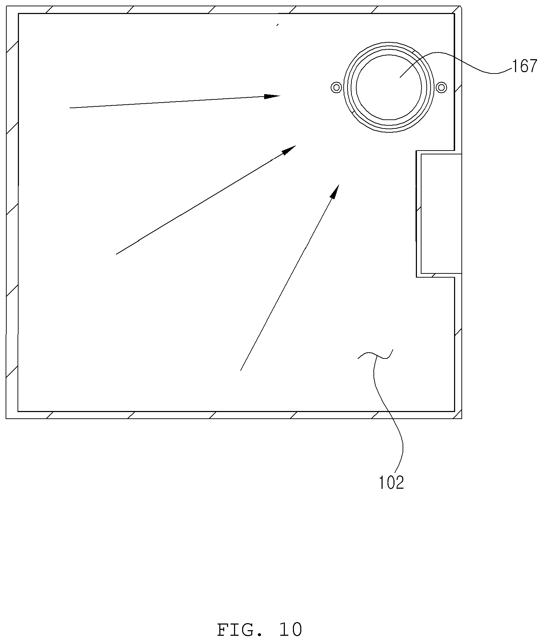

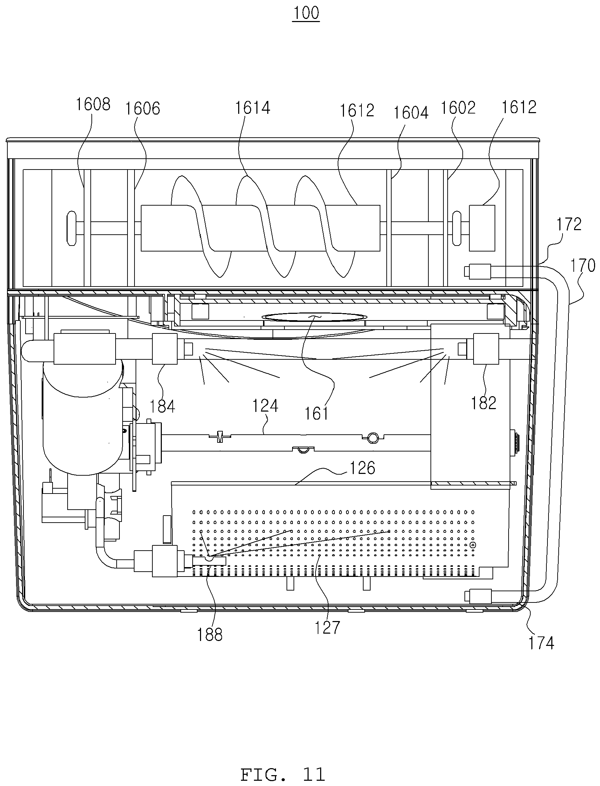

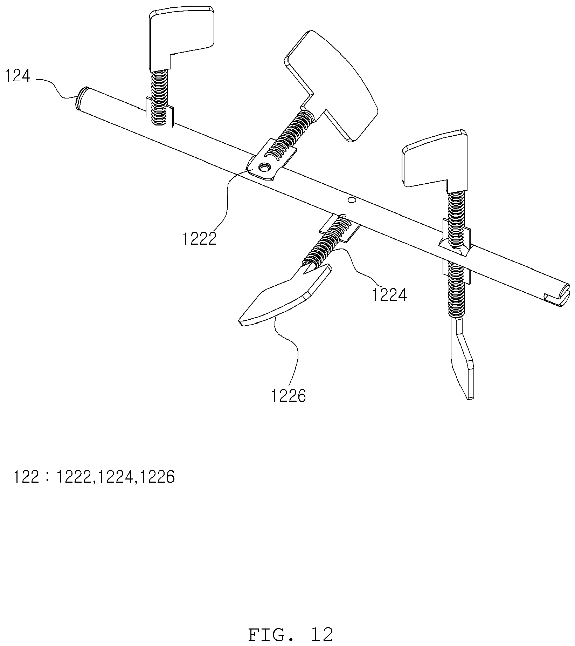

FIG. 1 is a diagram showing a food waste treatment apparatus having a bypass pipe formed therein according to an embodiment of the present invention. FIG. 2 is a cross-sectional view of the food waste treatment apparatus having a bypass pipe formed therein according to an embodiment of the present invention. FIG. 3 is a diagram showing the chamber of a food waste treatment apparatus having a bypass pipe formed therein according to an embodiment of the present invention. FIG. 4 is a diagram showing the inside of the chamber of the food waste treatment apparatus having a bypass pipe formed therein according to an embodiment of the present invention. FIG. 5 is a diagram showing the bottom of the outside of the chamber of the food waste treatment apparatus having a bypass pipe formed therein according to an embodiment of the present invention. FIG. 6 is a diagram showing the inflow unit and second inclined portion of the food waste treatment apparatus having a bypass pipe formed therein according to an embodiment of the present invention. FIG. 7 is a perspective view showing the inflow unit of the food waste treatment apparatus having a bypass pipe formed therein according to an embodiment of the present invention. FIG. 8 is a perspective view showing the lower end portion of the chamber from which an agitating net has been removed in the food waste treatment apparatus having a bypass pipe formed therein according to an embodiment of the present invention. FIG. 9 is a perspective view showing the lower end portion of the chamber from which the agitating net has been removed in the food waste treatment apparatus having a bypass pipe formed therein according to an embodiment of the present invention. FIG. 10 is a diagram showing an example of a flow of waste water in the food waste treatment apparatus having a bypass pipe formed therein according to an embodiment of the present invention. FIG. 11 is a perspective view showing the sprayer of the food waste treatment apparatus having a bypass pipe formed therein according to an embodiment of the present invention. FIG. 12 is a perspective view showing the agitating blade of the food waste treatment apparatus having a bypass pipe formed therein according to an embodiment of the present invention.

Referring to FIGS. 1 to 12, the food waste treatment apparatus according to an embodiment of the present invention is fastened to the bottom of a sink drainage hole, and includes a housing 11, a chamber 100, a inflow unit 160, a discharge unit 167, an agitating net 126, an agitating shaft 124, agitating blades 122 and a control unit 1000.

The housing 11 is a casing shape having space formed therein. The inflow unit 160 through which food waste and other impurities are thrown through the sink drainage hole is formed at the top of the housing 11. The discharge unit 167 from which waste water and a solid body are discharged to a conduit pipe are formed at the bottom of the housing 11.

The chamber 100 is disposed in the inside space of the housing 11.

The chamber 100 is formed in a box body form having an empty inside. The inflow unit 160 which is fastened to the bottom of the sink drainage hole and through which food waste is received is formed at the top of the chamber 100. Microbes of a liquid state are provided on the agitating net 126 having a plurality of perforations formed therein within the chamber 100. The food waste is decomposed by agitation between the received food waste by the rotation of the agitating blades and microbes melting from the microbes of the liquid state. The discharge unit 167 connected to a conduit pipe and from which waste water and a solid body, that is, the results of the decomposition of the food waste, are discharged is formed at the bottom of the chamber 100.

That is, the empty space is formed in the chamber. A certain amount of water and microbe liquid are always contained in the empty space. When food waste is received, the food waste is decomposed by agitation between the food waste and microbes melting from the microbe liquid, and is then discharged to the outside. The inflow unit 160 fixed to the sink drainage hole so that the food waste is received into the chamber is formed at the top of the chamber 100. The discharge unit 167 connected to a ditch and configured to discharge the decomposed food waste through waste water and/or in a solid matter form is disposed at the bottom of the chamber 100.

In this case, the term "agitation" refers to a task for making two types of materials having different physical or chemical properties a uniform mixed state using external mechanical energy.

Food waste may be decomposed by microbes after agitation of about 1 to 24 hours, may become waste water and/or a fine solid matter form, and may be then discharged to the ditch through the discharge unit 167.

The inflow unit 160 has a circular dual-pipe shape protruded from the chamber 100. A circular throwing hole 161 having a hole form and penetrating the inflow unit 160 up to the chamber 100 is formed at the center of the inflow unit 160. An inflow hole 165 having a doughnut form and penetrating the inflow unit 160 up to the top surface of the outside of the chamber is formed outside the throwing hole 161. Furthermore, a first inclined portion 162 having a cylindrical shape and inclined from the center of the inside surface of the inflow unit 160 to the throwing hole 161 is formed on the upper side of the inflow hole 165. A plurality of inflow holes 163 is formed toward the center of the throwing hole 161 in the first inclined portion 162 and connected to the inflow hole 165. A plurality of screw threads 164 is formed on the upper side of the center of the inside surface of the inflow unit 160, so the inflow unit 160 is inserted into the outside surface of the sink drainage hole.

A second inclined portion 166 of an inclined form is formed at the top surface of the outside of the chamber 100 that corresponds to the bottom of the inflow hole 165, and is connected to a waterspout unit 104 formed within the chamber. The waterspout unit 104 is formed in the spaced separated from the throwing hole 161 and the chamber 100 and is connected to the discharge unit 167.

A cover 106 is provided to enable the opening and shutting of the throwing hole 161 of the chamber 100. The cover corresponds to the size and shape of the throwing hole 161, and a handle is formed at the center of the cover 106. When the cover 106 is the open state, food waste can be thrown into the chamber 100 through the throwing hole 161. When the cover 106 is the closed state, waste water can flow into the waterspout unit 104 through the inflow holes 163.

That is, waste water generated when a user does the dishes or prepares food in the sink is discharged to the sink ditch through the throwing hole 161 in the state in which the cover 106 has been closed. The discharged waste water passes through the inflow hole 165 via the inflow holes 163 and flows along the second inclined portion 166. The discharged waste water is then discharged to the waterspout unit 104.

The agitating net 126, the agitating shaft 124 and the agitating blades 122 are provided within the chamber 100.

The agitating net 126 is fixed to both inside surfaces of the chamber 100. A section at the central portion of the agitating net 126 is formed to have a U shape so that food waste and microbes are accumulated in the central portion and decomposed. A plurality of perforations 127 is formed in the agitating net 126.

In this case, the perforations 127 are formed only in one surface of the agitating net 126 on the basis of the center line of the section of the agitating net 126. Accordingly, the amount of microbes that has not been agitated with food waste and that leaks to the outside through the perforations can be reduced.

Furthermore, the perforation 127 is formed to have an increasing area from the inside surface of the agitating net 126 to the outside surface, and thus the perforation 127 has a truncated cone or a prismoid. Accordingly, if food waste or a solid body, that is, the results of decomposition, is caught in the perforations 127, the food waste or the solid body can easily exit from the perforations 127 because the diameter of the perforation 127 on the opposite side is greater. Although the food waste or the solid body is caught in the perforations 127 without exiting from them, the food waste or the solid body can return to the inside of the agitating net 126 by the agitation of the agitating blades 122 or can fully exit to the outside of the agitating net 126.

The agitating shaft 124 is driven by the control unit 1000 and disposed over the agitating net 126. The agitating shaft 124 is fixed to both inside surfaces of the chamber 100 other than the inside surface of the chamber 100 in which the agitating net 126 has been disposed.

The agitating shaft 124 is rotated in a constant direction by an agitating motor 120 driven in response to a command from the control unit 1000.

In this case, the rotating direction of the agitating shaft 124 may be changed in the middle for effective agitation between food waste thrown into the chamber 100 and microbes.

A plurality of the agitating blades 122 is spaced apart from the agitating net 126 at a specific interval without coming into contact with the agitating net 126 and is fixed to the agitating shaft 124. More specifically, the plurality of the agitating blades 122 is fixed at a right angle to the agitating shaft 124. The agitating blades 122 and the agitating shaft 124 may form a specific angle other than 90° in order to effectuate the agitation of food waste.

Furthermore, each of the agitating blades 122 includes a fastening unit 1222, an elastic unit 1224 and a blade unit 1226.

The fastening unit 1222 has one end fixed to the agitating shaft 124 by welding or bolt joining.

The elastic unit 1224 is integrated with the other end of the fastening unit 1222 and is made of an elastic member, such as a high strength spring. If bulky or hard food waste is caught between the agitating blade 122 and the chamber 100 and the agitating net 126, the elastic unit 1224 is bent by the food waste so that a corresponding agitating blade or the chamber or the agitating net is not damaged due to unreasonable rotation of the agitating blade and then returns to its original position.

The blade unit 1226 is fastened to the elastic unit and includes sharp blade member at its both ends. The blade unit 1226 cuts bulky food waste between the chamber and the agitating blade fine while rotating and agitating microbes and food waste.

In this case, the blade direction of the blade unit 1226 may be parallel to the agitating shaft 124 or may be vertical to the agitating shaft 124.

Alternatively, the direction of the blade unit 1226 may form 45° along with the elastic unit 1224.

The plurality of agitating blades 122 is disposed on the agitating shaft 124 at specific intervals. In this case, the agitating blades 122 rotates along with the agitating shaft 124, rapidly agitates food waste within the chamber and microbes, and cuts fine bulky food to increase a section coming into contact with the microbes so that the food waste can be decomposed more rapidly.

Furthermore, the elastic unit 1224 and the blade unit 1226 may be provided in the entire agitating blade 122.

That is, a preferred agitating blade 122, such as an agitating blade 122 having only the elastic member fastened to the other end of the fastening unit 1222, or an agitating blades 122 having only the blade member fastened to the other end of the fastening unit 1222, may be disposed depending on the user purpose and expected effect of a user.

One side of the inflow unit is open to form a first hole 172.

One side at the lower portion of the chamber 100 is open to form a second hole 174.

A bypass pipe 170 connects the first hole 172 and the second hole 174. When waste water is filled up to the first hole 172, the bypass pipe 170 functions to move the waste water to the second hole 174.

In this case, the second hole 174 is formed at the lower portion of the chamber 100.

Furthermore, a spraying water supply device includes a first spraying water supply device 182, a second spraying water supply device 184, a fine particle water spraying device 186 and a high pressure spray device 188.

The spraying water supply device is formed in a pipe shape within the chamber 100 and is disposed on the upper side of the agitating net 126. The spraying water supply device sprays water or microbes, supplied from the outside, at a predetermined water pressure so that the sprayed water or microbes are sprayed on food waste inputted to the agitating net 126.

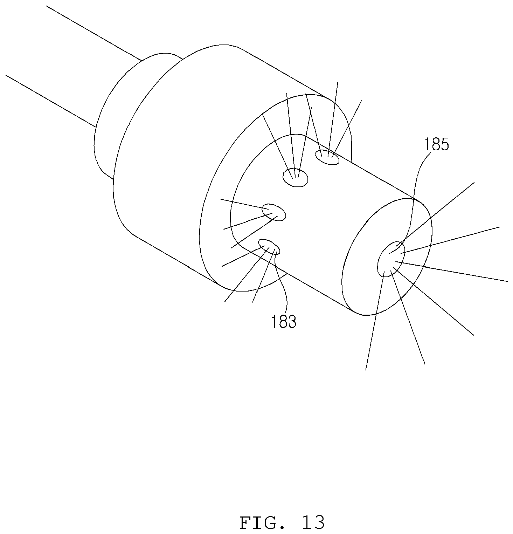

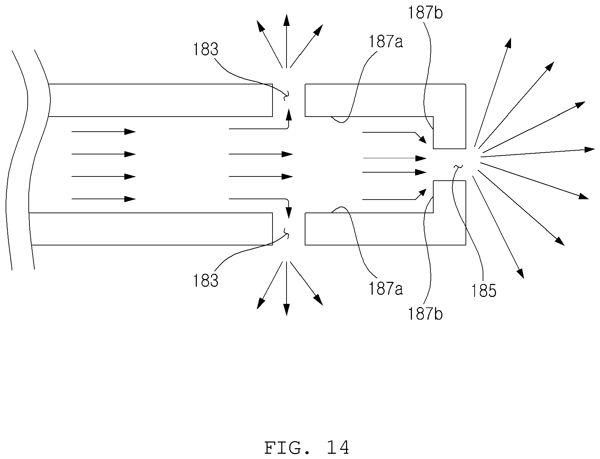

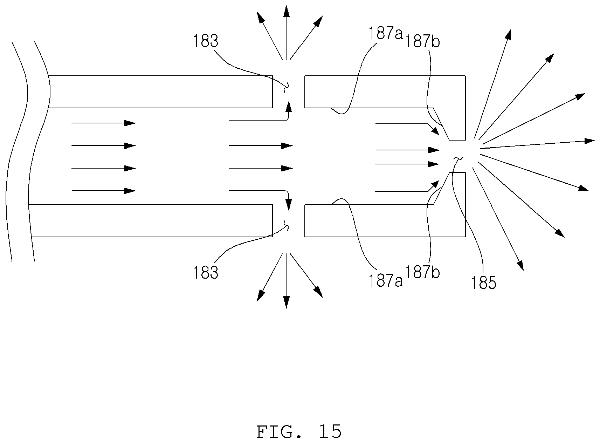

FIG. 13 is a perspective view showing the spray holes of the sprayer in the food waste treatment apparatus having a bypass pipe formed therein according to an embodiment of the present invention. FIGS. 14 and 15 are cross-sectional views of the spraying water supply device of the food waste treatment apparatus having a bypass pipe formed therein according to an embodiment of the present invention.

Referring to FIGS. 13 to 15, a circular spray hole 185 for spaying water or microbes is formed at the center on one side of the spraying water supply device.

The spraying water supply device is formed in a cylindrical shape. The circular spray hole 185 is formed at the center on top of the spraying water supply device. A top inside wall 187b and a side inside wall 187a have a tilt angle.

Furthermore, the top inside wall 187b and the side inside wall 187a form the tilt angle. The tilt angle may be 90° to 135°.

The spraying water supply device further includes one or more side spray holes 183 formed near a portion in which the circular spray hole 185 has been formed and adapted to radially spray water to surroundings in which the circular spray hole 185 has been disposed.

FIG. 14 shows an example in which the top inside wall 187b and side inside wall 187a of the spraying water supply device form a tilt angle of 90°.

More specifically, for example, water or microbes supplied to be sprayed on the circular spray hole 185 are partially sprayed on the side spray holes 183. Accordingly, the water is radially sprayed on surroundings in which the spraying water supply device has been disposed, thereby removing alien substances. The water is sprayed through the circular spray hole 185.

In this case, water that belongs to the sprayed water or microbes and that has not been sprayed on the circular spray hole 185 due to a collision with the top inside wall 187b is directed toward the circular spray hole 185 again by pressure of the supplied water, thus being bent at various angles.

The radius of spray is widened because the angle of the sprayed water is widened due to such an effect.

Another embodiment is described with reference to FIG. 15. In the present embodiment, the top inside wall 187b has a tilt angle from the side inside wall 187a to the circular spray hole 185 so that water or microbes are directed toward the circular spray hole 185.

The tilt angle has been illustrated as being 120°. Supplied water or microbes may move along the top inside wall 187b and moves toward the circular spray hole 185, thus being capable of being sprayed at various angles.

In this case, the top inside wall 187b may function to guide the spraying of the water or microbes.

Furthermore, the side inside wall 187a is fixed, and the tilt angle of the top inside wall 187b and the side inside wall 187a may be set by adjusting the slope of the top inside wall 187b. The tilt angle may have various angles if a corresponding angle does not hinder the spraying of water or microbes toward the circular spray hole 185. Accordingly, the tilt angle may be easily selected, if necessary.

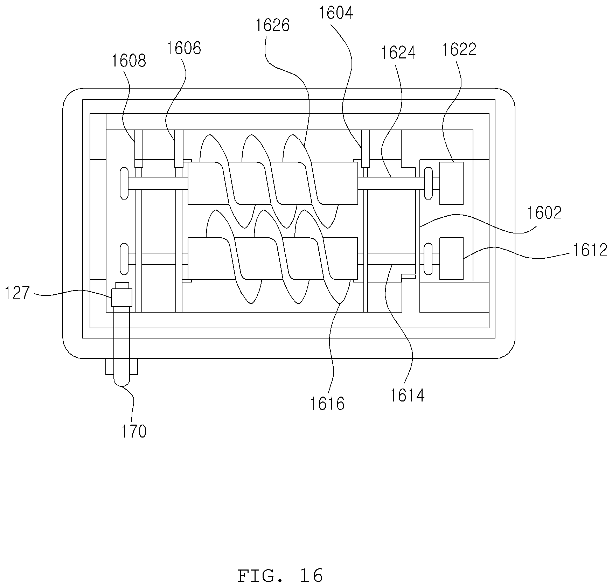

FIG. 16 is a plan view of a pulverizer of the food waste treatment apparatus having a bypass pipe formed therein according to a first embodiment of the present invention.

Referring to FIG. 16, the pulverization unit according to the first embodiment includes a first partition wall 1604, a second partition wall 1606, a first rotation shaft 1624 and a second rotation shaft 1614.

The first partition wall 1604 is formed on one side of the inflow unit.

The second partition wall 1606 is formed on the other side of the inflow unit.

A first pulverization blade 1626 formed to be orthogonal to one side of the first partition wall 1604 and the second partition wall 1606 and rotated by electric power from a first motor 1622 is formed on the first rotation shaft 1624.

The second rotation shaft 1614 is fixed to the first partition wall 1604 and the second partition wall 1606, spaced apart from the first rotation shaft 1624 at a specific interval, and formed in parallel to the first rotation shaft 1624. A second pulverization blade 1616 formed to be engaged with the first pulverization blade 1626 is formed on the second rotation shaft 1614.

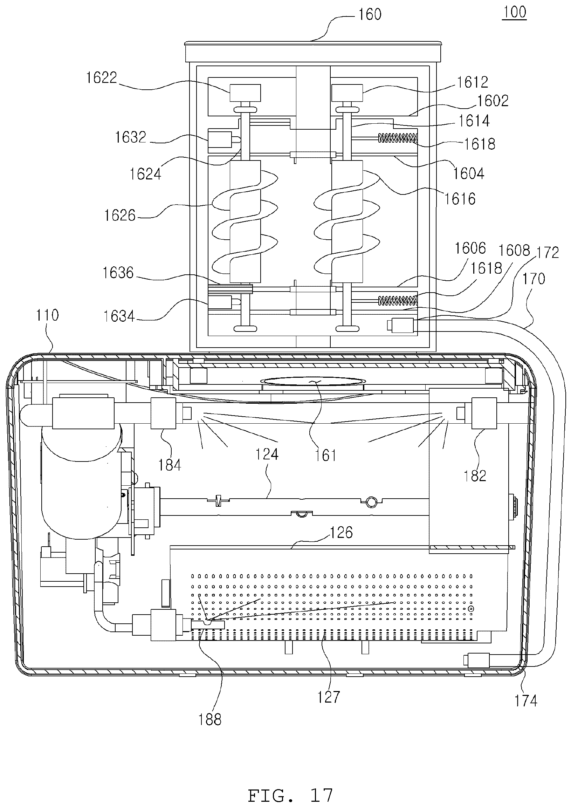

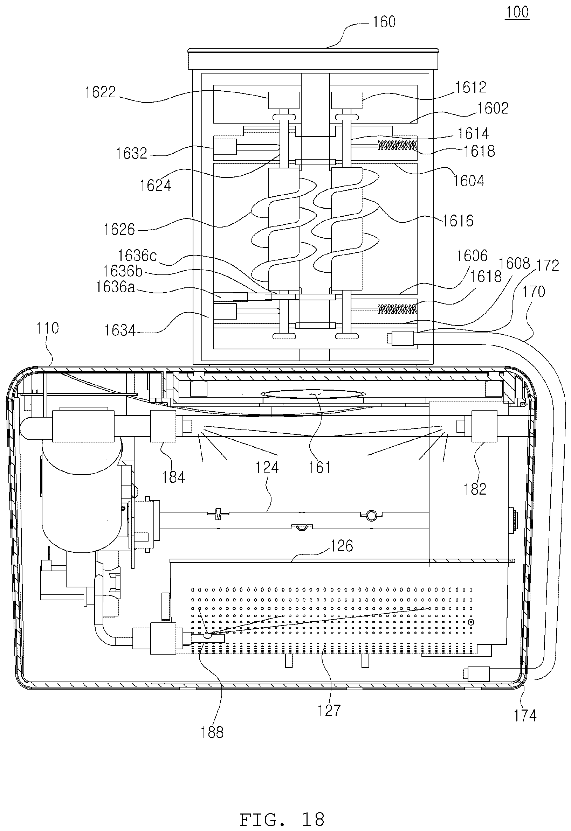

FIGS. 17 and 18 are cross-sectional views of a pulverizer of the food waste treatment apparatus having a bypass pipe formed therein according to a second embodiment of the present invention.

Referring to FIGS. 17 and 18, the pulverization unit according to the second embodiment includes a first partition wall 1604, a second partition wall 1606, a first rotation shaft 1624 and a second rotation shaft 1614.

The first partition wall 1604 is formed on the upper side of the inflow unit.

The second partition wall 1606 is formed on the lower side of the inflow unit.

In this case, the first partition wall 1604 and the second partition wall 1606 further include an insertion surface 1636a and transfer surfaces 1636b and 1636c.

When the cylinder is contracted, the transfer surfaces 1636b and 1636c are inserted into the insertion surface 1636a.

The transfer surfaces 1636b and 1636c are fixed so that the first rotation shaft 1624 can be rotated. When the cylinder is contacted, the transfer surfaces 1636b and 1636c are partially inserted into the insertion surface 1636a, thereby opening the bottom surface of the first rotation shaft 1624. When the cylinder is fully relaxed, the transfer surfaces 1636b and 1636c are protruded from the insertion surface 1636a, thereby tightly shutting the bottom surface of the first rotation shaft 1624.

A first pulverization blade 1626 formed to be orthogonal to the first partition wall 1604 and the second partition wall 1606 and rotated by electric power from the first motor 1622 is formed on the first rotation shaft 1624. The first pulverization blade 1626 is transferred left and right through one or more cylinders.

That is, if a user wants to have food waste pulverized, the cylinder is fully relaxed and thus the first rotation shaft 1624 is engaged with the second rotation shaft 1614, thereby pulverizing the food waste. If a user wants to have food waste thrown without being pulverized, the cylinder is contracted and thus the first rotation shaft 1624 becomes distant from the second rotation shaft 1614, thereby facilitating the insertion of the food waste.

The second rotation shaft 1614 is fixed to the second partition wall 1606, spaced apart from the first rotation shaft 1624 at a specific interval, and formed in parallel to the first rotation shaft 1624. The second pulverization blade 1616 formed to be engaged with the first pulverization blade 1626 is formed on the second rotation shaft 1614.

In this case, the second rotation shaft 1614 is subjected to an elastic force through spring members 1618 formed on the upper and lower sides of the second rotation shaft 1614. When a hard material, such as an apple, a persimmon or a chestnut, is inserted between the first rotation shaft 1624 and the second rotation shaft 1614, an elastic force may be applied to the second rotation shaft 1614 in order to prevent damage to the rotation shafts 1612 and 1622.

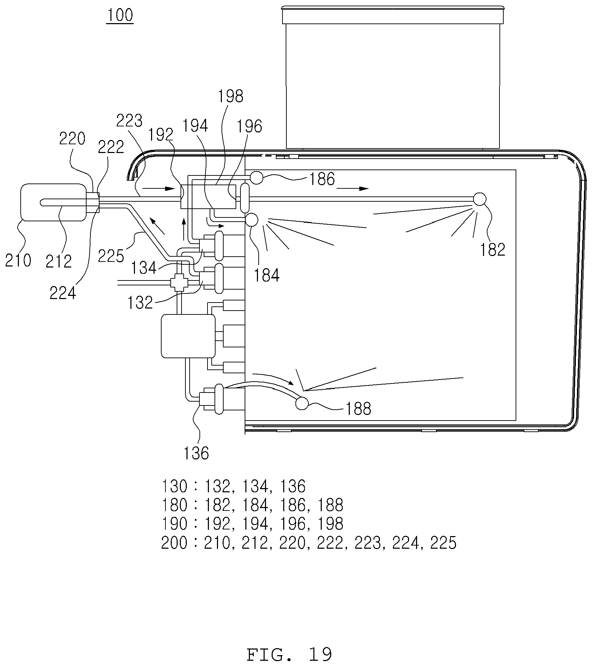

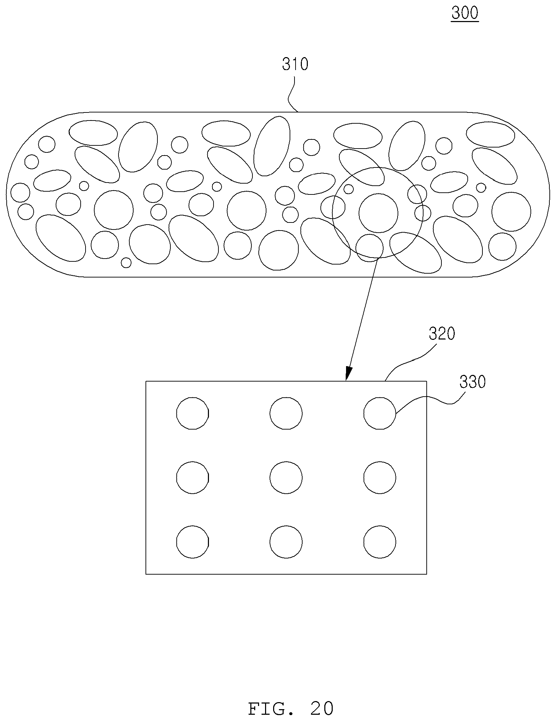

FIG. 19 is an exemplary diagram showing the spraying of water supplied from the outside in the food waste treatment apparatus having a bypass pipe formed therein according to an embodiment of the present invention, and FIG. 20 is a diagram showing a microbe capsule in the food waste treatment apparatus having a bypass pipe formed therein according to an embodiment of the present invention.

Referring to FIGS. 19 and 20, the food waste treatment apparatus having a bypass pipe formed therein according to an embodiment of the present invention further includes a capsule type microbe liquid 300, a microbe liquid supply unit 200, an electric heater pole 212, an external water supply unit, a microbe liquid throwing unit, a water bottle 190, a heating unit and a spray unit.

The microbe liquid forms the capsule type microbe liquid 300.

The capsule type microbe liquid 300 belongs to a liquid. When an oil film capsule 310 of the capsule type microbe liquid 300 is burst by an external force generated by the rotation of the agitating blades 122, microbes 330 within the oil film capsule 310 are sprayed and agitated with food waste.

The capsule type microbe liquid 300 includes a plurality of the microbes 330 within the oil film capsule 310 coated with an oil film. The oil film capsule 310 may be slowly burst by an external force.

For example, assuming that a specific section 320 within the oil film capsule 310 is 0.3T in length and breadth, when an external force is applied, only microbes 330 in the 0.1T portion of the specific section may be burst, and the remaining portion may be slowly burst after a specific time or may be burst by an external force with a time lag. Furthermore, when the microbes 330 are burst, microbe particles contained in the oil film capsule 310 are sprayed as far as possible so that the capsule type microbe liquid 300 capable of being agitated with food waste as much as possible can be formed.

The microbe liquid supply unit 200 includes a container body 210 in which a microbe liquid is stored and a container cover 220.

The container body 210 stores a microbe liquid.

The container cover 220 is coupled to one end of the body.

A first inflow hole 224 to which water is inputted and a first outflow hole 222 from which water or a microbe liquid is discharged are formed in the container cover 220.

A common PET bottle is used as the microbe liquid supply unit 200. The microbe liquid supply unit 200 may be formed to be detachable outside or inside the chamber 100. The reason for this is that a user can directly mount a microbe liquid container without a special technique for supplementing microbes, that is, an essential factor in the maintenance and management of the food waste treatment apparatus 10, in order to reduce an unnecessary maintenance cost and to facilitate maintenance.

The first inflow hole 224 of the container cover 220 may be formed in such a manner that a long pipe is inserted into the hole through which water is received so that the water can be injected into the body. The first outflow hole 222 of the container cover 220 may be formed in such a manner that a pipe shorter than the long pipe is inserted into the hole from which water or a microbe liquid is discharged so that the microbe liquid can be easily discharged.

The microbes 330 are aerobic microbes and have no problem if oxygen has only to be present in air. Aerobic microbes rapidly decompose an organic matter and thus convert the organic matter into carbon dioxide and heat. Accordingly, aerobic microbes have a bad smell much smaller than anaerobic microbes, such as ammonia.

The electric heater pole 212 is inserted into the container body and heats microbes for a predetermined time every predetermined time.

The electric heater pole 212 applies heat to a microbe liquid contained in the container body or maintains a constant temperature at which microbes are activated.

The external water supply unit includes an external water tank, a branch pipe, a first valve 132, a second valve 134 and a third valve 136.

The external water tank is disposed outside the chamber 100.

The branch pipe branches water discharged by the external water tank.

The first valve 132 is supplied with water from the branch pipe, and supplies the water to the first inflow hole 224.

The second valve 134 is supplied with water from the branch pipe, and supplies the water to the second spraying water supply device 184.

The third valve 136 is supplied with water from the branch pipe, and supplies the water to the third spraying water supply device 186.

Each of the first valve 132, the second valve 134 and the third valve 136 may be a solenoid valve.

The microbe liquid throwing unit includes the first valve 132, a first water supply pipe 225 and a second water supply pipe 223.

The first valve 132 is disposed on one side of the chamber 100, connects the external water supply pipe and the first water supply pipe 225, and supplies water.

The first water supply pipe 225 transfers the water, discharged by the first valve 132, to the first inflow hole 224.

The second water supply pipe 223 transfers water or a microbe liquid, discharged by the first outflow hole 222, to a second inflow hole 192 formed in the water bottle 190.

The water bottle 190 is formed to have an empty box body, and has the second inflow hole 192 formed on one side and a second outflow hole 196 formed on the other side.

The water bottle 190 is formed to have an empty box body, and has the second inflow hole 192 formed on one side and the second outflow hole 196 formed on the other side.

The water bottle 190 is supplied with water or a microbe liquid from the second inflow hole 192, and functions to connect the water or microbe liquid to the spray unit through the second outflow hole 196.

In this case, the heating device 198 is attached to the water bottle 190 in order to maintain a temperature optimized for an environment in which microbes can survive.

The heating unit is disposed inside or outside the water bottle, and applies heat to a microbe liquid received from the second inflow hole 192 through the heating device 198 for a predetermined time every predetermined time in order to maintain a constant temperature.

The spray unit includes the first spraying water supply device 182, the fine particle water spraying device 186 and the high pressure spray device 188.

The first spraying water supply device 182 is formed on the inside wall of the chamber 100 on one side thereof, and sprays water or a microbe liquid, discharged by the second outflow hole 196, on the agitating net 126.

The fine particle water spraying device 186 is formed on the inside wall of the chamber 100 on the other side thereof, and sprays water or a microbe liquid on the agitating net 126.

The high pressure spray device 188 is disposed under the agitating net 126, and sprays water, supplied from the third valve 136, on the agitating net 126 at a predetermined water pressure.

The first spraying water supply device 182 and the fine particle water spraying device 186 may be disposed over the agitating net 126.

The fine particle water spraying device 186 sprays the fine particles of water in a predetermine cycle so that the inside of the chamber 100 can maintain humidity optimized to an environment in which microbes can survive.

The high pressure spray device 188 may be installed as a high-pressure sprayer for removing food waste caught in the perforations 127 of the agitating net 126.

Furthermore, a third outflow hole is further formed on the other side of the water bottle 190. A second spraying water supply device 184 is formed on the inside wall on the other side of the chamber 100.

The second spraying water supply device 184 sprays water or a microbe liquid, discharged by the third outflow hole, on the agitating net 126.

The first spraying water supply device 182 and the second spraying water supply device 184 function to uniformly spray a microbe liquid on food waste inputted to the agitating net 126.

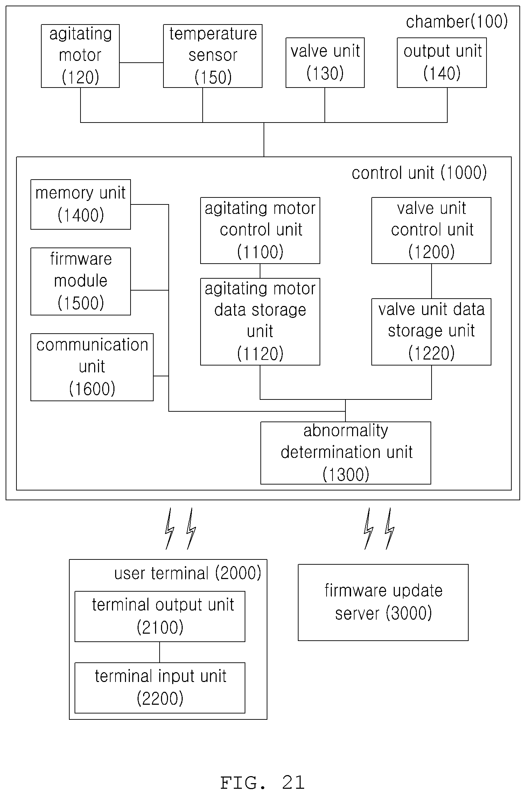

FIG. 21 is a block diagram of the food waste treatment apparatus according to an embodiment of the present invention.

Referring to FIG. 21, the food waste treatment apparatus further includes the chamber 100, a user terminal 2000, and a firmware update server 3000.

The chamber 100 further includes the agitating blades 122, the agitating shaft 124, the agitating motor 120, a temperature sensor 150, the valve unit 130, an output unit 140 and the control unit 1000.

A plurality of the agitating blades 122 is fixed to the agitating shaft 124 at a right angle. The agitating motor 120 is connected to one side of the agitating shaft 124 and rotates the agitating shaft 124. The agitating shaft 124 is rotated by the rotation of the agitating motor 120. Food waste is decomposed by agitation between food waste inputted by the rotation of the agitating blades 122 fixed to the agitating shaft 124 and microbes melting from microbes of a liquid state.

The temperature sensor 150 generates temperature measurement data by measuring a temperature of the agitating motor 120.

The valve unit 130 further includes the first valve, the second valve and the third valve, and sprays water at a predetermined water pressure.

The control unit 1000 controls the agitating motor 120 and the valve unit 130, and further includes an agitating motor control unit 1100, an agitating motor data storage unit 1120, a valve unit control unit 1000, a valve unit data storage unit 1220, an abnormality determination unit 1300, a memory unit 1400, a firmware module 1500 and a communication unit 1600.

The agitating motor control unit 1100 drives the agitating motor 120 and controls the RPM of the agitating motor 120 by sending an agitating motor operation signal to the agitating motor 120.

Furthermore, the agitating motor data storage unit 1120 previously stores the history in which the agitating motor operation signal has been transmitted to the agitating motor 120 and the history in which the RPM of the agitating motor 120 has been controlled as agitating motor data according to a set time zone.

The valve unit control unit 1000 drives the valve unit 130 and controls water pressure of the valve unit 130 by sending a valve unit operation signal to the valve unit 130.

More specifically, at least one of the first valve, the second valve and the third valve may be controlled.

Furthermore, the valve unit data storage unit 1220 previously stores the history in which the valve unit operation signal has been transmitted from the valve unit control unit 1000 to the valve unit 130 and the history in which water pressure of the first valve, second valve and third valve of the valve unit 130 has been controlled as valve unit data according to a set time zone.

The abnormality determination unit 1300 compares the operating state of the agitating motor 120 with the agitating motor data. If, as a result of the comparison, the operating state of the agitating motor 120 is found to be not identical with the agitating motor data, the abnormality determination unit 1300 determines that abnormality has occurred in the agitating motor 120, sends an agitating motor stop signal to the agitating motor control unit 1100 so that the operation of the agitating motor 120 is stopped, and outputs information indicating that an error has occurred through the output unit 140.

Furthermore, the abnormality determination unit 1300 compares the valve unit operation signal and the valve unit data in order to check whether the first valve, second valve and third valve of the valve unit 130 operate to comply with the valve unit operation signal. If, as a result of the comparison, it is determined that a problem has occurred, the abnormality determination unit 1300 sends a valve unit stop signal to the valve unit control unit 1000 so that the operation of at least one of the first valve, second valve and third valve of the valve unit 130 is stopped, and outputs information indicating that the error has occurred through the output unit 140.

At this time, the output unit 140 outputs a notification message indicative of the error information using at least one of graphics, text and audio data, and may output the notification message in various forms which may be recognized by a user who uses the food waste treatment apparatus in order to help the user's easy selection, and thus a further description thereof is omitted.

A fault of the agitating motor 120 and/or the valve unit 130 that belongs most of to the faults of the food waste treatment apparatus 10 can be detected through self-analysis at the early stage through the early diagnosis of the abnormality determination unit 1300, and thus the operation of the agitating motor 120 is stopped based on the detected fault. Accordingly, there are advantages in that unnecessary water of energy can be reduced and a greater failure can be prevented.

The memory unit 1400 stores one or more temperature ranges divided at specific intervals and the RPM data of the agitating motor 120 corresponding to the respective temperature ranges.

The temperature sensor 150 generates temperature measurement data by measuring a temperature of the agitating motor 120. When the temperature sensor 150 sends the temperature measurement data to the agitating motor control unit 1100, the agitating motor control unit 1100 compares the temperature measurement data with the RPM data stored in the memory unit 1400, and controls the RPM of the agitating motor 120 based on RPM data corresponding to a temperature range to which the temperature measurement data corresponds.

Furthermore, a predetermined first highest temperature range has been stored in the memory unit 1400. When temperature measurement data received from the temperature sensor 150 exceeds the highest temperature range, the memory unit 1400 sends an agitating motor stop request signal to the agitating motor control unit 1100 so that the operation of the agitating motor 120 is stopped.

In this case, when the operation of the agitating motor 120 is stopped, the temperature of the agitating motor 120 drops, and so a normal operation is made possible again. Accordingly, when temperature measurement data received from the temperature sensor 150 is a second highest temperature range or less, the memory unit 1400 sends an agitating motor operation request signal to the agitating motor control unit 1100 so that the agitating motor 120 operates again.

In this case, the first highest temperature range and the second highest temperature range are previously set by a user or an administrator. For example, the second highest temperature range may be set to be lower than the first highest temperature range at a specific interval in order to prevent the agitating motor 120 from being stopped again because the second highest temperature range exceeds the first highest temperature range as soon as the agitating motor 120 is driven again.

In the food waste treatment apparatus, the agitating motor 120 functions to directly decompose food waste. Accordingly, a load applied to the agitating motor 120 is different depending on the type and amount of food waste. If overload is applied to the agitating motor 120 or an alien substance other than food waste is inputted while the food waste is decomposed, overload is applied to the agitating motor 120. Such overload may result in the failure of the agitating motor 120.

If RPM data stored in the temperature sensor 150 and the memory unit 1400 according to an embodiment of the present invention is used, overload applied to the agitating motor 120 can be minimized.

The firmware module 1500 stores firmware data for controlling the food waste treatment apparatus. When firmware update data is received from the firmware update server 3000 through the communication unit 1600, the existing firmware data that controls the food waste treatment apparatus 10 is updated with the received firmware update data.

The firmware update server 3000 is a server for sending the firmware update data to the firmware module 1500 through the communication unit 1600.

In this case, a firmware driving method and a firmware update method are common programming methods, and a detailed description thereof is omitted.

Furthermore, each of the firmware data and the firmware update data has version information. The firmware module 1500 compares information about the version of the firmware data with information about the version of the firmware update data through communication with the firmware update server 3000 through the communication unit 1600. If, as a result of the comparison, the version of the firmware update data is found to be higher than that of the firmware data, the firmware module 1500 receives the firmware update data from the firmware update server 3000 and performs update.

At this time, the output unit 140 outputs information about the on-going, completion or error of the firmware update.

In this case, the output unit 140 outputs a notification message indicative of the on-going, completion or error information using at least one of graphics, text and audio data, and may output the notification message in various forms which may be recognized by a user who uses the food waste treatment apparatus in order to help the user's easy selection, and thus a further description thereof is omitted.

The user terminal 2000 further includes a terminal output unit 2100 and a terminal input unit 2200.

In general, the user terminal 2000 may be a portable terminal, such as a handheld terminal or a smart phone, but is not limited thereto.

That is, any device may be used as the user terminal 2000 if the device allows a user to communicate with the food waste treatment apparatus in a wired or wireless manner.

The agitating motor data stored in the agitating motor data storage unit 1120 and the valve unit data stored in the valve unit data storage unit 1220 are transmitted to the user terminal 2000 through the communication unit 1600. The user terminal 2000 outputs the received agitating motor data and valve unit data to the terminal output unit 2100.

Furthermore, if the abnormality determination unit 1300 determines that a problem has occurred in the agitating motor 120 and stops the operation of the agitating motor 120, the user terminal 2000 outputs the operation stop information of the agitating motor 120 through the terminal output unit 2100. If the operation of one or more of the first valve, second valve and third valve of the valve unit 130 is stopped, the user terminal 2000 outputs the operation stop information of the valve unit 130 through the terminal output unit 2100.

At this time, the output unit 140 outputs a notification message indicative of the on-going, completion or error information using at least one of graphics, text and audio data, and may output the notification message in various forms which may be recognized by a user who uses the food waste treatment apparatus in order to help the user's easy selection, and thus a further description thereof is omitted.

When a user inputs a command, the terminal input unit 2200 generates an agitating motor control request signal, including input contents inputted by the user, and sends the agitating motor control request signal to the agitating motor control unit 1100 through the communication unit 1600 so that the user can remotely control the food waste treatment apparatus.

Furthermore, even in controlling the valve unit 130, the terminal input unit 2200 generates a valve unit control request signal, including input contents inputted by a user, and sends the valve unit control request signal to the valve unit control unit 1000 through the communication unit 1600.

In this case, the user may control the operation, stop and RPM of the agitating motor 120 by inputting information about the operation, stop and RPM through the terminal input unit. Furthermore, the user may control the opening and shutting and water pressure of one or more of the first valve, second valve and third valve of the valve unit 130 by inputting information about the opening and shutting and water pressure. Accordingly, the roles of the agitating motor control unit 1100 and the valve unit control unit 1000 can be remotely controlled by a user request.

A flow of the self-fault diagnosis system of the food waste treatment apparatus according to a first embodiment of the present invention is described below.

The agitating motor control unit 1100 drives the agitating motor 120 and controls the RPM of the agitating motor 120 by sending an agitating motor operation signal.

The agitating motor data storage unit 1120 stores the history in which the agitating motor operation signal has been transmitted and the history in which the RPM of the agitating motor 120 has been controlled as agitating motor data according to a set time zone.

The abnormality determination unit 1300 compares the operating state of the agitating motor 120 with the agitating motor data. If, as a result of the comparison, the operating state of the agitating motor 120 is found to be not identical with the agitating motor data, the abnormality determination unit 1300 determines that a problem has occurred in the agitating motor 120 and sends an agitating motor stop signal to the agitating motor control unit 1100.

The agitating motor control unit 1100 receives the agitating motor stop signal from the abnormality determination unit 1300, stops the operation of the agitating motor 120, and outputs information indicating that an error has occurred through the output unit 140.

A flow of the self-fault diagnosis system of the food waste treatment apparatus according to a second embodiment of the present invention is described below.

The valve unit control unit 1000 drives one or more of the first valve, second valve and third valve of the valve unit 130 and water pressure of the valves by sending a valve unit operation signal.

The valve unit data storage unit 1220 previously stores the history in which the valve unit operation signal has been transmitted and the history in which water pressure of the first valve to the third valve of the valve unit 130 has been controlled as valve unit data according to a set time zone.

The abnormality determination unit 1300 compares the operating state of the valve unit 130 with the valve unit data. If, as a result of the comparison, the operating state of the valve unit 130 is found to be not identical with the valve unit data, the abnormality determination unit 1300 determines that a problem has occurred in one or more of the first valve, second valve and third valve of the valve unit 130 and sends a valve unit stop signal to the valve unit control unit 1000.

The valve unit control unit 1000 receives the valve unit stop signal from the abnormality determination unit 1300, stops the operation of the valve unit 130, and outputs information indicating that an error has occurred through the output unit 140.

A flow of a method for monitoring the food waste treatment apparatus according to a first embodiment of the present invention is described below.

The agitating motor control unit 1100 drives the agitating motor 120 and controls the RPM of the agitating motor 120 by sending an agitating motor operation signal.

The agitating motor data storage unit 1120 previously stores the history in which the agitating motor operation signal has been transmitted and the history in which the RPM of the agitating motor 120 has been controlled as agitating motor data according to a set time zone, and sends the agitating motor data to the user terminal 2000 through the communication unit 1600.

The user terminal 2000 outputs the received agitating motor data through the terminal output unit 2100.

At this time, the abnormality determination unit 1300 determines whether the agitating motor 120 is abnormal or not. If, as a result of the determination, it is determined that a problem has occurred, the abnormality determination unit 1300 sends an agitating motor stop signal to the agitating motor control unit 1100 so that the operation of the agitating motor 120 is stopped. Since the stopping of the agitating motor 120 also corresponds to data including the agitating motor data, corresponding information may be output through the terminal output unit 2100.

When a user inputs request contents through the terminal input unit, an agitating motor control request signal including the request contents is transmitted to the agitating motor control unit 1100 through the communication unit 1600.

The agitating motor control unit 1100 receives the agitating motor control request signal and controls the agitating motor 120 in response to the agitating motor control request signal including the request contents inputted by the user.

A flow of a method for monitoring the food waste treatment apparatus according to a second embodiment of the present invention is described below.

The valve unit control unit 1000 drives the first valve to third valve of the valve unit 130 and controls water pressure of the first to third valves by sending a valve unit operation signal.

The valve unit data storage unit 1220 previously stores the history in which the valve unit operation signal has been transmitted and the history in which water pressure of the first valve to third valve of the valve unit 130 has been controlled as valve unit data according to a set time zone.

The valve unit data storage unit 1220 sends the valve unit data to the user terminal 2000 through the communication unit 1600.

The user terminal 2000 outputs the received valve unit data through the terminal output unit 2100.

At this time, the abnormality determination unit 1300 determines whether the valve unit 130 is normal or not. If, as a result of the determination, it is determined that a problem has occurred in the valve unit 130, the abnormality determination unit 1300 sends a valve unit stop signal to the valve unit control unit 1000 so that the operation of one or more of the first valve to third valve of the valve unit 130 is stopped. Since the stopping of the valve unit 130 also corresponds to data including the valve unit data, corresponding information may be outputted through the terminal output unit 2100.

When a user inputs request contents through the terminal input unit, the user terminal 2000 sends a valve unit control request signal, including the request contents, to the valve unit control unit 1000 through the communication unit 1600.

The valve unit control unit 1000 receives the valve unit control request signal and controls one or more of the first valve to third valve of the valve unit 130 in response to the valve unit control request signal including the request contents inputted by the user.

A flow of the firmware update system of the food waste treatment apparatus according to an embodiment of the present invention is described below.

The firmware module 1500 receives information about the version of the firmware update data from the firmware update server 3000 through the communication unit 1600.

The firmware module 1500 compares the firmware data with the version information of the firmware update data.

If, as a result of the comparison, the version of the firmware update data is found to be higher than the version of the firmware update data, the firmware module 1500 receives the firmware update data from the firmware update server 3000.

The firmware update server 3000 sends the firmware update data through the communication unit 1600.

The firmware module 1500 updates the stored firmware data with the received firmware update data.

Information indicating that the firmware update is in progress is output through the output unit 140.

When the firmware update is completed, information indicating that the firmware update has been completed is output through the output unit 140.

A flow of a method for controlling the rotation of the motor of the food waste treatment apparatus according to an embodiment of the present invention is described below.

The agitating motor control unit 1100 drives the agitating motor 120 and controls the RPM of the agitating motor 120 by sending an agitating motor operation signal to the agitating motor 120.

The temperature sensor 150 generates temperature measurement data by measuring a temperature of the agitating motor 120 and sends the temperature measurement data to the agitating motor control unit 1100.

The agitating motor control unit 1100 controls the RPM of the agitating motor 120 based on RPM data of the agitating motor 120 corresponding to a temperature range stored in the memory unit 1400.

If the temperature of the agitating motor 120 measured by the temperature sensor 150 exceeds a first highest temperature range previously set in the memory unit 1400, the agitating motor control unit 1100 stops the operation of the agitating motor 120 by sending an agitating motor stop signal to the agitating motor control unit 1100.

If the measured temperature does not exceed the first highest temperature range, the agitating motor control unit 1100 maintains normal control of the agitating motor 120.

If the operation of the agitating motor 120 has been stopped and the temperature of the agitating motor 120 measured by the temperature sensor 150 is equal to or less than a second highest temperature range previously set in the memory unit 1400, an agitating motor operation request signal is transmitted to the agitating motor control unit 1100 so that it drives the agitating motor 120 again.

A flow of a system for recording the operation history of the food waste treatment apparatus according to a first embodiment of present invention is described below.

The agitating motor control unit 1100 drives the agitating motor 120 and controls the RPM of the agitating motor 120 by sending an agitating motor operation signal.

The temperature sensor 150 generates temperature measurement data by measuring a temperature of the agitating motor 120, and sends the temperature measurement data to the agitating motor control unit 1100.

The agitating motor control unit 1100 receives the temperature measurement data and controls the RPM of the agitating motor 120 based on RPM data corresponding to a temperature range stored in the memory unit 1400.

The agitating motor data storage unit 1120 previously stores the history in which the agitating motor operation signal has been transmitted and the history in which the RPM of the agitating motor 120 has been controlled as agitating motor data according to a set time zone.

If the temperature measurement data measured by the temperature sensor 150 exceeds a predetermined first highest temperature range, the agitating motor data storage unit 1120 sends an agitating motor stop request signal to stop the operation of the agitating motor 120 to the agitating motor control unit 1100 so that the operation of the agitating motor 120 is stopped.

At this time, when the operation of the agitating motor 120 is stopped, a normal operation is made possible again because the temperature of the agitating motor 120 drops. Accordingly, when temperature measurement data received from the temperature sensor 150 is a predetermined second highest temperature range or less, an agitating motor operation request signal is transmitted to the agitating motor control unit 1100 so that the agitating motor 120 operates again.

Furthermore, since stop, operation and RPM control information about the agitating motor 120 through the temperature sensor 150 and the memory unit 1400 are also included in agitating motor data, corresponding information may be stored in the agitating motor data storage unit 1120.

A flow of a system for recording the operation history of the food waste treatment apparatus according to a second embodiment of the present invention is described below.

The valve unit control unit 1000 drives the first valve to third valve of the valve unit 130 and controls water pressure of the first valve to third valve of the valve unit 130 by sending a valve unit operation signal.

The valve unit data storage unit 1220 previously stores the history in which the valve unit operation signal has been transmitted and the history in which water pressure of the first valve to third valve of the valve unit 130 has been controlled as valve unit data according to a set time zone.

As described above, the agitating motor data storage unit 1120 and the valve unit data storage unit 1220 previously store the respective histories in which the agitating motor 120 and the valve unit 130 have operates according to a set time zone. Accordingly, a user or an administrator can analyze the time when a failure was generated and the cause of the failure through the histories stored in the agitating motor data storage unit 1120, and the valve unit data storage unit 1220 when a failure is generated in the food waste treatment apparatus 10.

Furthermore, the control unit 1000 further includes a button unit 142, 144 and a substrate unit (not shown).

The button unit 142, 144 is formed in the front of the chamber and has one or more buttons formed therein.

In this case, the button may include a cultivation mode switch 142 and a sleep mode switch 144.

One or more switches are formed in the front of the substrate unit (not shown). The switches and the buttons are disposed to correspond to each other. When a specific switch corresponding to a specific button is pressed by pressing the specific button, a specific signal corresponding to the specific switch is generated to drive the chamber 100.

In this case, the substrate unit may include one or more LEDs.

The LED may emit light corresponding to a specific signal when the specific signal is generated through the substrate unit.

As described above, in accordance with the present invention, the inflow unit and the bottom of the food waste treatment apparatus are connected by the bypass pipe, and waste water thrown through the inflow unit is transferred to the bottom of the food waste treatment apparatus. Accordingly, there can be provided the food waste treatment apparatus having a bypass pipe formed therein, which can prevent a rise in the water level of the food waste treatment apparatus attributable to the waste water.

## Claims

1. A food treatment apparatus for decomposing food waste using microbes, comprising:
a chamber (100) formed in a box body form having an empty inside, wherein an inflow unit (160) is formed at a top of the chamber (100), the inflow unit (160) being fastened to a bottom of a sink drainage hole and food waste being received through the inflow unit (160), microbes of a liquid state are provided on an agitating net (126) within the chamber (100), a plurality of perforations (127) being formed in the agitating net (126), the food waste is decomposed by agitation between the received food waste by the rotation of agitating blades (122) and microbes melting from the microbes of the liquid state, and a discharge unit (167) is connected to a conduit pipe and is formed at a bottom of the chamber (100), waste water and a solid body which are results of the decomposition of the food waste being discharged from the discharge unit (167);
a first hole (172) formed by opening one side of the inflow unit (160);
a second hole (174) formed by opening one side at a lower portion of the chamber (100); and
a bypass pipe (170) adapted to connect the first hole (172) and the second hole (174);
the food waste treatment apparatus further comprising:
a microbe liquid supply unit (200) comprising a container body (210) in which the microbe liquid is stored and a container cover (220) coupled to one end of the container body (210), a first inflow hole (224) through which water is received, and a first outflow hole (222) from which water or a microbe liquid are discharged being formed in the container cover (220);
an external water supply unit comprising an external water tank disposed outside the chamber (100), a branch pipe by which water discharged by the external water tank is branched, a first valve (132) adapted to receive the water from the branch pip and to supply the water to the first inflow hole (224), a second valve (134) adapted to receive the water from the branch pipe and to supply the water to a fine particle water spraying device (186), and a third valve (136) adapted to receive the water from the branch pipe and to supply the water to a high pressure spray device (188);
a microbe liquid throwing unit disposed on one side of the chamber (100) and comprising a first water supply pipe (225) for transferring the water discharged by the first valve (132) to the first inflow hole (224) and a second water supply pipe (223) for transferring the water or microbe liquid discharged by the first outflow hole (222) to a second inflow hole (192) formed in a water bottle (190);
the water bottle (190) formed in an empty box body form, the second inflow hole (192) being formed on a first side of the water bottle (190) and a second outflow hole (196) being formed on a second side of the water bottle (190); and
a spray unit comprising a first spraying water supply device (182) formed on an inside wall on a first side of the chamber (100) and configured to spray the water or a microbe liquid drained out from the second outflow hole (196) toward the agitating net (126), the fine particle water spraying device (186) formed on the inside wall on a second side of the chamber (100) and configured to spray the water or a microbe liquid drained out from the second outflow hole (196) toward the agitating net (126), and the high pressure spray device (188) formed in a pipe form within the chamber (100) and disposed under the agitating net (126) and configured to remove food waste caught in the perforations (127) of the agitating net (126) by spraying externally supplied water toward the agitating net (126) at a predetermined water pressure.

2. The food waste treatment apparatus of claim 1, further comprising:
a first partition wall (1604) formed on a first side of the inflow unit (160);
a second partition wall (1606) formed on a second side of the inflow unit (160);
a first rotation shaft (1624) formed to be orthogonal on a first side of the first partition wall (1604) and the second partition wall (1606), a first pulverization blade (1626) rotated by electric power from a first motor (1622) being formed on the first rotation shaft (1624); and
a second rotation shaft (1614) fixed to the first partition wall (1604) and the second partition wall (1606), spaced apart from the first rotation shaft (1624) at a specific interval, and formed in parallel to the first rotation shaft (1624), a second pulverization blade (1616) being formed on the second rotation shaft (1614) and engaged with the first pulverization blade (1626).

3. The food waste treatment apparatus of claim 1, further comprising:
a button unit formed on a front surface of the chamber (100), one or more buttons being formed in the button unit; and
a substrate unit configured to have one or more switches formed on a front surface of the substrate unit and configured to generate a specific signal corresponding to a specific switch when the specific switch corresponding to a specific button is pressed by pressing the specific button and to drive the chamber (100) in response to the specific signal,
wherein the switches and the buttons are disposed to correspond to each other.

4. The food waste treatment apparatus of claim 1, further comprising a spraying water supply device formed in a pipe form within the chamber (100), disposed over the agitating net (126), and configured to spray externally supplied water or microbes on food waste inputted to the agitating net (126) by spraying the water or microbes at a predetermined water pressure,
wherein straight line-shaped or cross-shaped spray holes for spraying water are formed in one side of the spraying water supply device.

5. The food waste treatment apparatus of claim 1, further comprising:
a microbe liquid supply unit (200) comprising a container body (210) in which the microbe liquid is stored and a container cover (220) coupled to one end of the container body (210), a first inflow hole (224) through which water is received, and a first outflow hole (222) from which water or a microbe liquid are discharged being formed in the container cover (220);
an electric heater pole inserted into the container body (210) and configured to heat the microbe liquid for a predetermined time every predetermined time;
a microbe liquid throwing unit disposed on one side of the chamber (100) and configured to comprise a first valve (132) for connecting an external water supply pipe and a first water supply pipe (225) and supplying water, a first water supply pipe (225) for transferring water discharged by the first valve (132) to the first inflow hole (224), and a second water supply pipe (223) for transferring water or a microbe liquid discharged by the first outflow hole (222) to a second inflow hole (192) formed in a water bottle (190);
the water bottle (190) formed in an empty box body form, the second inflow hole (192) being formed on a first side of the water bottle (190) and a second outflow hole (196) being formed on a second side of the water bottle (190); and
a spray unit formed on an inside wall on one side of the chamber (100) and configured to comprise a first spraying water supply device (182) for spraying water or a microbe liquid discharged by the second outflow hole (196) toward the agitating net (126).

6. The food waste treatment apparatus of claim 1, further comprising:
a capsule type microbe liquid (300) belonging to a liquid and comprising an oil film capsule (310), wherein the oil film capsule (310) is burst by an external force generated by the rotation of the agitating blades (122) and microbes within the oil film capsule (310) are sprayed and agitated with the food waste;
a microbe liquid supply unit (200) comprising a container body (210) in which the microbe liquid is stored and a container cover (220) coupled to one end of the container body (210), a first inflow hole (224) through which water is received, and a first outflow hole (222) from which water or a microbe liquid are discharged being formed in the container cover (220);
a microbe liquid throwing unit disposed on one side of the chamber (100) and configured to comprise a first valve (132) for connecting an external water supply pipe and a first water supply pipe (225) and supplying water, a first water supply pipe (225) for transferring water discharged by the first valve (132) to the first inflow hole (224), and a second water supply pipe (223) for transferring water or a microbe liquid discharged by the first outflow hole (222) to a second inflow hole (192) formed in a water bottle (190);
the water bottle (190) formed in an empty box body form, the second inflow hole (192) being formed on a first side of the water bottle (190) and a second outflow hole (196) being formed on a second side of the water bottle (190); and
a spray unit formed on an inside wall on one side of the chamber (100) and configured to comprise a first spraying water supply device (182) for spraying water or a microbe liquid discharged by the second outflow hole (196) toward the agitating net (126).

7. The food waste treatment apparatus of claim 1, further comprising:
a microbe liquid supply unit (200) comprising a container body (210) in which the microbe liquid is stored and a container cover (220) coupled to one end of the container body (210), a first inflow hole (224) through which water is received, and a first outflow hole (222) from which water or a microbe liquid are discharged being formed in the container cover (220);
a microbe liquid throwing unit disposed on one side of the chamber (100) and configured to comprise a first valve (132) for connecting an external water supply pipe and a first water supply pipe (225) and supplying water, a first water supply pipe (225) for transferring water discharged by the first valve (132) to the first inflow hole (224), and a second water supply pipe (223) for transferring water or a microbe liquid discharged by the first outflow hole (222) to a second inflow hole (192) formed in a water bottle (190);
the water bottle (190) formed in an empty box body form, the second inflow hole (192) being formed on a first side of the water bottle (190) and a second outflow hole (196) being formed on a second side of the water bottle (190);
a heating unit disposed inside or outside the water bottle (190) and adapted to maintain a constant temperature by applying heat to water or a microbe liquid received from the second inflow hole (192) through a heating pad for generating heat for a predetermined time every predetermined time; and
a spray unit formed on an inside wall on one side of the chamber (100) and configured to comprise a first spraying water supply device (182) for spraying water or a microbe liquid discharged by the second outflow hole (196) toward the agitating net (126).

8. The food waste treatment apparatus of claim 1, wherein:
the chamber (100) comprises:
an agitating shaft (124) to which a plurality of the agitating blades (122) is fixed at a right angle;
an agitating motor (120) connected to one end of the agitating shaft (124) to rotate an agitating shaft (124);
a temperature sensor (150) configured to generate temperature measurement data by measuring a temperature of the agitating motor (120) and to send the temperature measurement data to an agitating motor control unit (1100); and
a control unit (1000) configured to control the agitating motor (120), and
the control unit (1000) comprises the agitating motor control unit (1100) configured to drive the agitating motor (120) by sending an agitating motor (120) operation signal to the agitating motor (120), receive the temperature measurement data from the temperature sensor (150), and control an RPM of the agitating motor (120) based on results of the temperature measurement.

9. The food waste treatment apparatus of claim 1, wherein:
the chamber (100) comprises:
a valve unit comprising a first valve (132), a second valve (134) and a third valve (136) and configured to spray water at a predetermined water pressure; and
a control unit (1000) configured to control an agitating motor (120) and the valve unit, and
the control unit (1000) comprises:
an agitating motor control unit (1100) configured to drive the agitating motor (120) and control an RPM of the agitating motor (120) by sending an agitating motor (120) operation signal to the agitating motor (120);
a valve unit control unit (1000) configured to drive the valve unit and control water pressure of the valve unit by sending a valve unit operation signal to the valve unit;
an agitating motor (120) data storage unit configured to previously store a history in which the agitating motor (120) operation signal has been transmitted from the agitating motor control unit (1100) to the agitating motor (120) and a history in which the RPM of the agitating motor (120) has been controlled as agitating motor (120) data according to a set time zone;
a valve unit data storage unit (1220) configured to previously store a history in which the valve unit operation signal has been transmitted from the valve unit control unit (1000) to the valve unit and a history in which the water pressure of the valve unit has been controlled as valve unit data according to a set time zone; and
an abnormality determination unit (1300) configured to compare an operating state of the agitating motor (120) with the agitating motor (120) data, determine that abnormality has occurred in the agitating motor (120) if, as a result of the comparison, the operating state of the agitating motor (120) is found to be not identical with the agitating motor (120) data, send an agitating motor (120) stop signal to the agitating motor control unit (1100) so that the operation of the agitating motor (120) is stopped, compare an operating state of the valve unit with the valve unit data, determine that abnormality has occurred in the valve unit if, as a result of the comparison, the operating state of the valve unit is found to be not identical with the valve unit data, and send a valve unit stop signal to the valve unit control unit (1000) so that the operation of the valve unit is stopped.

10. The food waste treatment apparatus of claim 1, wherein:
the chamber (100) comprises:
an agitating shaft (124) to which a plurality of the agitating blades (122) is fixed at a right angle; and
an agitating motor (120) connected to one end of the agitating shaft (124) to rotate an agitating shaft (124), and
the control unit comprises:
an agitating motor control unit (1100) configured to drive the agitating motor (120) and control an RPM of the agitating motor (120) by sending an agitating motor (120) operation signal to the agitating motor (120);
a valve unit control unit (1000) configured to drive the valve unit and control water pressure of the valve unit by sending a valve unit operation signal to the valve unit;
an agitating motor (120) data storage unit configured to previously store a history in which the agitating motor (120) operation signal has been transmitted from the agitating motor control unit (1100) to the agitating motor (120) and a history in which the RPM of the agitating motor (120) has been controlled as agitating motor (120) data according to a set time zone; and
a valve unit data storage unit (1220) configured to previously store a history in which the valve unit operation signal has been transmitted from the valve unit control unit (1000) to the valve unit and a history in which the water pressure of the valve unit has been controlled as valve unit data according to a set time zone.

11. The food waste treatment apparatus of claim 1, further comprising a control unit configured to control an operation of the food waste treatment apparatus,
wherein the control unit comprises:
a communication unit (1600) configured to receive firmware update data from a firmware update server; and
a firmware module (1500) configured to store firmware data for controlling the food waste treatment apparatus and to update existing firmware data with firmware update data when the firmware update data is received from the firmware update server through the communication unit (1600), and
the firmware update server sends the firmware update data to the firmware module (1500) through the communication unit (1600).

12. The food waste treatment apparatus of claim 1, further comprising a spraying water supply device formed in a pipe form within the chamber (100), disposed over the agitating net (126), and configured to spray externally supplied water or microbes on food waste inputted to the agitating net (126) by spraying the water or microbes at a predetermined water pressure,
wherein the spraying water supply device is formed in a cylindrical shape, a circular spray hole being formed at a center on a top surface of the spraying water supply device and an inside wall on the top surface and an inside wall on a side forming a tilt angle.

## Patentansprüche

1. Lebensmittelbehandlungsvorrichtung zum Zersetzen von Lebensmittelabfällen mit Hilfe von Mikroben, Folgendes umfassend:
eine Kammer (100), die in einer Kastenkörperform gebildet ist und ein leeres Inneres aufweist, wobei an einer Oberseite der Kammer (100) eine Einlasseinheit (160) gebildet ist, wobei die Einlasseinheit (160) an einer Unterseite einer Abflussdrainageöffnung befestigt ist und durch die Einlasseinheit (160) Lebensmittelabfall aufgenommen wird, wobei Mikroben in einem flüssigen Zustand an einem Rührnetz (126) in der Kammer (100) bereitgestellt sind, in dem Rührnetz (126) mehrere Perforationen (127) gebildet sind, der Lebensmittelabfall durch Rühren des aufgenommenen Lebensmittelabfalls durch die Rotation von Rührschaufeln (122) zersetzt wird und Mikroben aus den Mikroben des flüssigen Zustandes abschmelzen und eine Ablasseinheit (167) mit einem Leitungsrohr verbunden und an einer Unterseite der Kammer (100) gebildet ist, wobei Abwasser und ein Festkörper, die aus der Zersetzung des Lebensmittelabfalls entstehen, aus der Ablasseinheit (167) abgelassen werden,
eine erste Öffnung (172), die durch Öffnen einer Seite der Einlasseinheit (160) gebildet ist,
eine zweite Öffnung (174), die durch Öffnen einer Seite an einem unteren Abschnitt der Kammer (100) gebildet ist, und
eine Umgehungsleitung (170), die dafür eingerichtet ist, die erste Öffnung (172) und die zweite Öffnung (174) zu verbinden,
wobei die Lebensmittelabfall-Behandlungsvorrichtung ferner Folgendes umfasst:
eine Mikrobenflüssigkeits-Zufuhreinheit (200), die einen Behälterkörper (210) umfasst, in dem die Mikrobenflüssigkeit aufbewahrt wird, und eine Behälterabdeckung (220), die an ein Ende des Behälterkörpers (210) gekoppelt ist, wobei in der Behälterabdeckung (220) eine erste Einlassöffnung (224), durch die Wasser aufgenommen wird, und eine erste Auslassöffnung (222), aus der Wasser oder Mikrobenflüssigkeit abgelassen wird, gebildet ist,
eine externe Wasserzufuhreinheit, umfassend einen externen Wassertank, der außerhalb der Kammer (100) angeordnet ist, eine Abzweigleitung, durch die Wasser abgezweigt wird, das durch den externen Wassertank abgelassen wird, ein erstes Ventil (132), das dafür eingerichtet ist, das Wasser von der Abzweigleitung aufzunehmen und das Wasser der ersten Einlassöffnung (224) zuzuführen, ein zweites Ventil (134), das dafür eingerichtet ist, das Wasser von der Abzweigleitung aufzunehmen und das Wasser einer Feinpartikel-Wasser-Sprüheinrichtung (186) zuzuführen, und ein drittes Ventil (136), das dafür eingerichtet ist, das Wasser von der Abzweigleitung aufzunehmen und das Wasser einer Hochdrucksprüheinrichtung (188) zuzuführen,
eine Mikrobenflüssigkeits-Auswurfeinheit, die an einer Seite der Kammer (100) angeordnet ist und eine erste Wasserzufuhrleitung (225) zum Überführen des von dem ersten Ventil (132) abgelassenen Wassers zur ersten Einlassöffnung (224) und eine zweite Wasserzufuhrleitung (223) zum Überführen des Wassers oder der Mikrobenflüssigkeit, das/die durch die erste Auslassöffnung (222) abgelassen wird, zu einer zweiten Einlassöffnung (192), die in einer Wasserflasche (190) gebildet ist, umfasst,
wobei die Wasserflasche (190) in Form eines leeren Kastenkörpers gebildet ist, wobei die zweite Einlassöffnung (192) an einer ersten Seite der Wasserflasche (190) gebildet ist und an einer zweiten Seite der Wasserflasche (190) eine zweite Auslassöffnung (196) gebildet ist, und
eine Sprüheinheit, die eine erste Sprühwasser-Zufuhreinrichtung (182) umfasst, die an einer Innenwand an einer ersten Seite der Kammer (100) gebildet und dafür gestaltet ist, das Wasser oder eine Mikrobenflüssigkeit, das/die aus der zweiten Auslassöffnung (196) abgelassen wird, hin zum Rührnetz (126) zu sprühen, wobei die Feinpartikel-Wasser-Sprüheinrichtung (186) an der Innenwand einer zweiten Seite der Kammer (100) gebildet und dafür gestaltet ist, das Wasser oder eine Mikrobenflüssigkeit, das/die aus der zweiten Auslassöffnung (196) abgelassen wird, hin zum Rührnetz (126) zu sprühen, und die Hochdrucksprüheinrichtung (188) in einer Leitungsform in der Kammer (100) gebildet und unter dem Rührnetz (126) angeordnet ist und dafür gestaltet ist, Lebensmittelabfall zu entfernen, der in den Perforationen (127) des Rührnetzes (126) hängenbleibt, indem sie extern zugeführtes Wasser mit einem festgelegten Wasserdruck auf das Rührnetz (126) sprüht.

2. Lebensmittelabfall-Behandlungsvorrichtung nach Anspruch 1, ferner Folgendes umfassend:
eine erste Trennwand (1604), die an einer ersten Seite der Einlasseinheit (160) gebildet ist,
eine zweite Trennwand (1606), die an einer zweiten Seite der Einlasseinheit (160) gebildet ist,
eine erste Drehwelle (1624), die rechtwinklig zu einer ersten Seite der ersten Trennwand (1604) und der zweiten Trennwand (1606) gebildet ist, wobei auf der ersten Drehwelle (1624) eine erste Feinmahlschaufel (1626) gebildet ist, die durch Elektroenergie von einem ersten Motor (1622) gedreht wird, und
eine zweite Drehwelle (1614), die beabstandet in einem spezifischen Abstand zur ersten Drehwelle (1624) an der ersten Trennwand (1604) und der zweiten Trennwand (1606) befestigt und parallel zur ersten Drehwelle (1624) gebildet ist, wobei auf der zweiten Drehwelle (1614) eine zweite Feinmahlschaufel (1616) gebildet ist und mit der ersten Feinmahlschaufel (1626) in Eingriff steht.

3. Lebensmittelabfall-Behandlungsvorrichtung nach Anspruch 1, ferner Folgendes umfassend:
eine Tasteneinheit, die an einer Vorderseite der Kammer (100) gebildet ist, wobei in der Tasteneinheit eine oder mehrere Tasten gebildet sind, und
eine Substrateinheit, die dafür gestaltet ist, einen oder mehrere Schalter aufzuweisen, die auf einer Vorderseite der Substrateinheit gebildet und dafür gestaltet sind, ein spezifisches Signal zu erzeugen, das einem spezifischen Schalter entspricht, wenn der spezifische Schalter, welcher einer spezifischen Taste entspricht, durch Drücken der spezifischen Taste gedrückt wird, und die Kammer (100) in Reaktion auf das spezifische Signal zu betreiben,
wobei die Schalter und Tasten dafür angeordnet sind, einander zu entsprechen.

4. Lebensmittelabfall-Behandlungsvorrichtung nach Anspruch 1, ferner eine Sprühwasser-Zufuhreinrichtung umfassend, die in Form einer Leitung in der Kammer (100) gebildet, über dem Rührnetz (126) angeordnet und dafür gestaltet ist, extern zugeführtes Wasser oder Mikroben auf Lebensmittelabfall zu sprühen, der in das Rührnetz (126) eingegeben wurde, indem das Wasser oder die Mikroben mit einem festgelegten Wasserdruck gesprüht werden,
wobei in einer Seite der Sprühwasser-Zufuhreinrichtung geradlinig geformte oder kreuzförmige Sprühöffnungen zum Sprühen des Wassers gebildet sind.

5. Lebensmittelabfall-Behandlungsvorrichtung nach Anspruch 1, ferner Folgendes umfassend:
eine Mikrobenflüssigkeits-Zufuhreinheit (200), die einen Behälterkörper (210) umfasst, in dem die Mikrobenflüssigkeit aufbewahrt wird, und eine Behälterabdeckung (220), die an ein Ende des Behälterkörpers (210) gekoppelt ist, wobei in der Behälterabdeckung (220) eine erste Einlassöffnung (224), durch die Wasser aufgenommen wird, und eine erste Auslassöffnung (222), aus der Wasser oder Mikrobenflüssigkeit abgelassen wird, gebildet ist,
einen elektrischen Heizstab, der in den Behälterkörper (210) eingesetzt und dafür gestaltet ist, die Mikrobenflüssigkeit jeweils nach festgelegten Zeitspannen eine Zeit lang zu erwärmen,
eine Mikrobenflüssigkeits-Auswurfeinheit, die an einer Seite der Kammer (100) angeordnet und dafür gestaltet ist, Folgendes zu umfassen: ein erstes Ventil (132) zum Verbinden einer externen Wasserzufuhrleitung und einer ersten Wasserzufuhrleitung (225) und zum Zuführen von Wasser, eine erste Wasserzufuhrleitung (225) zum Überführen von vom ersten Ventil (132) abgelassenen Wassers zur ersten Einlassöffnung (224) und eine zweite Wasserzufuhrleitung (223) zum Überführen von Wasser oder einer Mikrobenflüssigkeit, das/die durch die erste Auslassöffnung (222) abgelassen wird, zu einer zweiten Einlassöffnung (192), die in einer Wasserflasche (190) gebildet ist,
die Wasserflasche (190), die in Form eines leeren Kastenkörpers gebildet ist, wobei die zweite Einlassöffnung (192) an einer ersten Seite der Wasserflasche (190) gebildet ist und an einer zweiten Seite der Wasserflasche (190) eine zweite Auslassöffnung (196) gebildet ist, und
eine Sprüheinheit, die an einer Innenwand an einer Seite der Kammer (100) gebildet und dafür gestaltet ist, eine erste Sprühwasser-Zufuhreinrichtung (182) zum Sprühen von Wasser oder einer Mikrobenflüssigkeit, das/die durch die zweite Auslassöffnung (196) abgelassen wird, hin zum Rührnetz (126) zu umfassen.

6. Lebensmittelabfall-Behandlungsvorrichtung nach Anspruch 1, ferner Folgendes umfassend:
eingekapselte Mikrobenflüssigkeit (300), die zu einer Flüssigkeit gehört und eine Ölfilmkapsel (310) umfasst, wobei die Ölfilmkapsel (310) durch eine externe Kraft aufbricht, die durch das Drehen der Rührschaufeln (122) erzeugt wird, wobei die Mikroben in der Ölfilmkapsel (310) versprüht und mit dem Lebensmittelabfall verrührt werden,
eine Mikrobenflüssigkeits-Zufuhreinheit (200), die einen Behälterkörper (210) umfasst, in dem die Mikrobenflüssigkeit aufbewahrt wird, und eine Behälterabdeckung (220), die an ein Ende des Behälterkörpers (210) gekoppelt ist, wobei in der Behälterabdeckung (220) eine erste Einlassöffnung (224), durch die Wasser aufgenommen wird, und eine erste Auslassöffnung (222), aus der Wasser oder Mikrobenflüssigkeit abgelassen wird, gebildet ist,
eine Mikrobenflüssigkeits-Auswurfeinheit, die an einer Seite der Kammer (100) angeordnet und dafür gestaltet ist, ein erstes Ventil (132) zum Verbinden einer externen Wasserzufuhrleitung und einer ersten Wasserzufuhrleitung (225) und zum Zuführen von Wasser zu umfassen, eine erste Wasserzufuhrleitung (225) zum Überführen von vom ersten Ventil (132) abgelassenen Wasser zur ersten Einlassöffnung (224) und eine zweite Wasserzufuhrleitung (223) zum Überführen von Wasser oder einer Mikrobenflüssigkeit, das/die durch die erste Auslassöffnung (222) abgelassen wird, zu einer zweiten Einlassöffnung (192), die in einer Wasserflasche (190) gebildet ist,
die Wasserflasche (190), die in Form eines leeren Kastenkörpers gebildet ist, wobei die zweite Einlassöffnung (192) an einer ersten Seite der Wasserflasche (190) gebildet ist und an einer zweiten Seite der Wasserflasche (190) eine zweite Auslassöffnung (196) gebildet ist, und
eine Sprüheinheit, die an einer Innenwand an einer ersten Seite der Kammer (100) gebildet und dafür gestaltet ist, eine erste Sprühwasser-Zufuhreinrichtung (182) zum Sprühen von Wasser oder einer Mikrobenflüssigkeit, das/die durch die zweite Auslassöffnung (196) abgelassen wird, hin zum Rührnetz (126) zu umfassen.

7. Lebensmittelabfall-Behandlungsvorrichtung nach Anspruch 1, ferner Folgendes umfassend:
eine Mikrobenflüssigkeits-Zufuhreinheit (200), die einen Behälterkörper (210) umfasst, in dem die Mikrobenflüssigkeit aufbewahrt wird, und eine Behälterabdeckung (220), die an ein Ende des Behälterkörpers (210) gekoppelt ist, wobei in der Behälterabdeckung (220) eine erste Einlassöffnung (224), durch die Wasser aufgenommen wird, und eine erste Auslassöffnung (222), aus der Wasser oder Mikrobenflüssigkeit abgelassen wird, gebildet ist,
eine Mikrobenflüssigkeits-Auswurfeinheit, die an einer Seite der Kammer (100) angeordnet und dafür gestaltet ist, ein erstes Ventil (132) zum Verbinden einer externen Wasserzufuhrleitung und einer ersten Wasserzufuhrleitung (225) und zum Zuführen von Wasser zu umfassen, eine erste Wasserzufuhrleitung (225) zum Überführen von vom ersten Ventil (132) abgelassenen Wasser zur ersten Einlassöffnung (224) und eine zweite Wasserzufuhrleitung (223) zum Überführen von Wasser oder von Mikrobenflüssigkeit, das/die durch die erste Auslassöffnung (222) abgelassen wird, zu einer zweiten Einlassöffnung (192), die in einer Wasserflasche (190) gebildet ist,
die Wasserflasche (190), die in Form eines leeren Kastenkörpers gebildet ist, wobei die zweite Einlassöffnung (192) an einer ersten Seite der Wasserflasche (190) gebildet ist und an einer zweiten Seite der Wasserflasche (190) eine zweite Auslassöffnung (196) gebildet ist,
eine Heizeinheit, die inner- oder außerhalb der Wasserflasche (190) angeordnet und dafür eingerichtet ist, eine konstante Temperatur aufrechtzuerhalten, indem sie durch ein Heizkissen zum Erzeugen von Wärme jeweils nach festgelegten Zeitspannen eine Zeit lang Wärme in Wasser oder eine Mikrobenflüssigkeit einbringt, die von der zweiten Einlassöffnung (192) aufgenommen wird, und
eine Sprüheinheit, die an einer Innenwand an einer ersten Seite der Kammer (100) gebildet und dafür gestaltet ist, eine erste Sprühwasser-Zufuhreinrichtung (182) zum Sprühen von Wasser oder einer Mikrobenflüssigkeit, das/die durch die zweite Auslassöffnung (196) abgelassen wird, hin zum Rührnetz (126) zu umfassen.

8. Lebensmittelabfall-Behandlungsvorrichtung nach Anspruch 1, wobei die Kammer (100) Folgendes umfasst:
eine Rührwelle (124), an der mehrere der Rührschaufeln (122) im rechten Winkel befestigt sind,
einen Rührmotor (120), der mit einem Ende der Rührwelle (124) verbunden ist, um eine Rührwelle (124) zu drehen,
einen Temperatursensor (150), der dafür gestaltet ist, durch Messen einer Temperatur des Rührmotors (120) Temperaturmessdaten zu erzeugen und die Temperaturmessdaten an eine Rührmotor-Steuereinheit (1100) zu senden, und
eine Steuereinheit (1000), die dafür gestaltet ist, den Rührmotor (120) zu steuern, und
wobei die Steuereinheit (1000) die Rührmotor-Steuereinheit (1100) umfasst, die dafür gestaltet ist, den Rührmotor (120) durch Senden eines Rührmotor(120)-Betriebssignals an den Rührmotor (120), Empfangen der Temperaturmessdaten von dem Temperatursensor (150) und Steuern einer Drehzahl des Rührmotors (120) basierend auf den Ergebnissen der Temperaturmessung zu betreiben.

9. Lebensmittelabfall-Behandlungsvorrichtung nach Anspruch 1, wobei die Kammer (100) Folgendes umfasst:
eine Ventileinheit, die ein erstes Ventil (132), ein zweites Ventil (134) und ein drittes Ventil (136) umfasst und dafür gestaltet ist, Wasser mit einem festgelegten Wasserdruck zu versprühen, und
eine Steuereinheit (1000), die dafür gestaltet ist, einen Rührmotor (120) und die Ventileinheit zu steuern, und
wobei die Steuereinheit (1000) Folgendes umfasst:
eine Rührmotor-Steuereinheit (1100), die dafür gestaltet ist, den Rührmotor (120) zu betreiben und eine Drehzahl des Rührmotors (120) durch Senden eines Rührmotor-Betriebssignals an den Rührmotor (120), zu steuern,
eine Ventileinheit-Steuereinheit (1000), die dafür gestaltet ist, die Ventileinheit zu betreiben und den Wasserdruck der Ventileinheit durch Senden eines Ventileinheit-Betriebssignals an die Ventileinheit zu steuern,
eine Rührmotor(120)-Datenspeichereinheit, die dafür gestaltet ist, vorab eine Darstellung, in der das Rührmotor-Betriebssignal von der Rührmotor-Steuereinheit (1100) an den Rührmotor (120) übertragen wurde, und eine Darstellung, in der die Drehzahl des Rührmotors (120) gesteuert wurde, als Rührmotor-Daten gemäß einem eingestellten Zeitbereich zu speichern,
eine Ventileinheit-Datenspeichereinheit (1220), die dafür gestaltet ist, vorab eine Darstellung, in der das Ventileinheit-Betriebssignal von der Ventileinheit-Steuereinheit (1000) an die Ventileinheit übertragen wurde, und eine Darstellung, in der der Wasserdruck der Ventileinheit gesteuert wurde, als Ventileinheitendaten gemäß einem eingestellten Zeitbereich zu speichern, und
eine Anomalität-Bestimmungseinheit (1300), die dafür gestaltet ist, einen Betriebszustand des Rührmotors (120) mit den Rührmotor(120)-Daten zu vergleichen, zu bestimmen, dass im Rührmotor (120) eine Anomalität aufgetreten ist, wenn im Ergebnis des Vergleichs festgestellt wurde, dass der Betriebszustand des Rührmotors (120) nicht identisch mit den Rührmotor(120)-Daten ist, ein Rührmotor(120)-Stoppsignal an die Rührmotor-Steuereinheit (1100) zu senden, so dass der Betrieb des Rührmotors (120) gestoppt wird, einen Betriebszustand der Ventileinheit mit den Ventileinheitendaten zu vergleichen, zu bestimmen, dass in der Ventileinheit eine Anomalität aufgetreten ist, wenn im Ergebnis des Vergleichs festgestellt wurde, dass der Betriebszustand der Ventileinheit nicht identisch mit den Ventileinheitendaten ist, und ein Ventileinheit-Stoppsignal an die Ventileinheit-Steuereinheit (1000) zu senden, so dass der Betrieb der Ventileinheit gestoppt wird.

10. Lebensmittelabfall-Behandlungsvorrichtung nach Anspruch 1, wobei die Kammer (100) Folgendes umfasst:
eine Rührwelle (124), an der mehrere der Rührschaufeln (122) im rechten Winkel befestigt sind, und
einen Rührmotor (120), der mit einem Ende der Rührwelle (124) verbunden ist, um eine Rührwelle (124) zu drehen, und
wobei die Steuereinheit Folgendes umfasst:
eine Rührmotor-Steuereinheit (1100), die dafür gestaltet ist, den Rührmotor (120) zu betreiben und eine Drehzahl des Rührmotors (120) durch Senden eines Rührmotor(120)-Betriebssignals an den Rührmotor (120) zu steuern,
eine Ventileinheit-Steuereinheit (1000), die dafür gestaltet ist, die Ventileinheit zu betreiben und den Wasserdruck der Ventileinheit durch Senden eines Ventileinheit-Betriebssignals an die Ventileinheit zu steuern,
eine Rührmotor(120)-Datenspeichereinheit, die dafür gestaltet ist, vorab eine Darstellung, in der das Rührmotor(120)-Betriebssignal von der Rührmotor-Steuereinheit (1100) an den Rührmotor (120) übertragen wurde, und eine Darstellung, in der die Drehzahl des Rührmotors (120) gesteuert wurde, als Rührmotor(120)-Daten gemäß einem eingestellten Zeitbereich zu speichern,
eine Ventileinheit-Datenspeichereinheit (1220), die dafür gestaltet ist, vorab eine Darstellung, in der das Ventileinheit-Betriebssignal von der Ventileinheit-Steuereinheit (1000) an die Ventileinheit übertragen wurde, und eine Darstellung, in der der Wasserdruck der Ventileinheit gesteuert wurde, als Ventileinheitendaten gemäß einem eingestellten Zeitbereich zu speichern.

11. Lebensmittelabfall-Behandlungsvorrichtung nach Anspruch 1, ferner eine Steuereinheit umfassend, die dafür gestaltet ist, einen Betrieb der Lebensmittelabfall-Behandlungsvorrichtung zu steuern,
wobei die Steuereinheit Folgendes umfasst:
eine Kommunikationseinheit (1600), die dafür gestaltet ist, Firmware-Aktualisierungsdaten von einem Firmware-Aktualisierungsserver zu empfangen, und
ein Firmware-Modul (1500), das dafür gestaltet ist, Firmware-Daten zum Steuern der Lebensmittelabfall-Behandlungsvorrichtung zu speichern und bestehende Firmware-Daten mit Firmware-Aktualisierungsdaten zu aktualisieren, wenn die Firmware-Aktualisierungsdaten durch die Kommunikationseinheit (1600) von dem Firmware-Aktualisierungsserver empfangen werden, und
der Firmware-Aktualisierungsserver sendet die Firmware-Aktualisierungsdaten über die Kommunikationseinheit (1600) an das Firmware-Modul (1500).

12. Lebensmittelabfall-Behandlungsvorrichtung nach Anspruch 1, ferner eine Sprühwasser-Zufuhreinrichtung umfassend, die in Form einer Leitung in der Kammer (100) gebildet und über dem Rührnetz (126) angeordnet ist sowie dafür gestaltet ist, extern zugeführtes Wasser oder Mikroben auf Lebensmittelabfall zu sprühen, der in das Rührnetz (126) eingegeben wurde, indem das Wasser oder die Mikroben mit einem festgelegten Wasserdruck gesprüht werden,
wobei die Sprühwasser-Zufuhreinrichtung in einer Zylinderform gebildet ist, wobei in einer Mitte auf einer Oberseite der Sprühwasser-Zufuhreinrichtung eine runde Sprühöffnung gebildet ist und eine Innenwand auf der Oberseite und eine Innenwand auf einer Seite einen Neigungswinkel bilden.

## Revendications

1. Un appareil de traitement pour décomposer des déchets alimentaires en utilisant des microbes, comprenant :
une chambre (100) formée dans une forme de corps de boîte ayant un intérieur vide, une unité (160) d'écoulement vers l'intérieur étant formée au sommet de la chambre (100), l'unité (160) d'écoulement vers l'intérieur étant fixée à un fond d'un trou de drainage de puits et des déchets alimentaires étant reçus à travers l'unité (160) d'écoulement vers l'intérieur, des microbes en un état liquide étant prévus sur une grille d'agitation (126) située dans la chambre (100), une pluralité de perforations (127) étant formées dans la grille d'agitation (126), les déchets alimentaires étant décomposés par agitation entre les déchets alimentaires reçus par la rotation des pales d'agitation (122) et les microbes se mélangeant depuis les microbes de l'état liquide, et une unité de délivre (167) est reliée à un conduit et est formée au niveau d'un fond de la chambre (100), des eaux usées et un corps solide qui résultent de la décomposition des déchets alimentaires étant évacués depuis l'unité de délivre (167) ;
un premier trou (172) étant formé par une ouverture située sur un côté de l'unité (160) d'écoulement vers l'intérieur ;
un deuxième trou (174) étant formé par une ouverture située sur un côté au niveau d'une partie inférieure de la chambre (100) ; et
un tuyau de dérivation (170) étant adapté pour relier le premier trou (172) et le deuxième trou (174) ;
l'appareil de traitement de déchets alimentaires comprenant en outre :
une unité (200) d'alimentation en liquide microbien comprenant un corps de récipient (210) dans lequel le liquide microbien est stocké et un couvercle de récipient (220) est relié à une extrémité du corps de récipient (210), un premier trou d'entrée (224) au travers duquel de l'eau est reçue, et un premier trou de sortie (222), à partir duquel de l'eau ou un liquide microbien est délivré, est formé dans le couvercle de récipient (220) ;
une unité externe d'alimentation en eau comprenant un réservoir d'eau externe disposé à l'extérieur de la chambre (100), un tuyau de dérivation par lequel l'eau évacuée par le réservoir d'eau externe est dérivée, une première vanne (132) adaptée pour recevoir l'eau provenant du tuyau de dérivation et pour alimenter l'eau au premier trou d'entrée (224), une deuxième vanne (134) adaptée pour recevoir l'eau provenant du tuyau de dérivation et fournir l'eau à un dispositif (186) de pulvérisation d'eau en fines particules, et une troisième vanne (136) adaptée pour recevoir l'eau provenant du tuyau de dérivation et pour fournir l'eau à un dispositif (188) de pulvérisation à haute pression ;
une unité de projection de liquide microbien disposée sur un côté de la chambre (100) et comprenant un premier tuyau (225) d'alimentation en eau pour transférer l'eau évacuée par la première vanne (132) vers le premier trou d'entrée (224), et un deuxième tuyau (223) d'alimentation en eau pour transférer l'eau ou le liquide microbien évacué par le premier trou de sortie (222) vers un deuxième trou d'entrée (192) formé dans la bouteille d'eau (190) ;
la bouteille d'eau (190) étant formée dans une forme de corps de boîte vide, le deuxième trou d'entrée (192) étant formé sur un premier côté de la bouteille d'eau (190), et un deuxième trou de sortie (196) étant formé sur un deuxième côté bouteille d'eau (190) ; et
une unité de pulvérisation comprenant un premier dispositif (182) d'alimentation en eau de pulvérisation formé sur une paroi interne sur un premier côté de la chambre (100) et configuré pour pulvériser l'eau ou un liquide microbien drainé depuis le deuxième trou de sortie (196) en direction de la grille d'agitation (126), le dispositif (186) de pulvérisation d'eau en particules fines étant formé sur la paroi interne sur un deuxième côté de la chambre (100) et configuré pour pulvériser l'eau ou un liquide microbien drainé depuis le deuxième trou de sortie (196) en direction de la grille d'agitation (126), et le dispositif (188) de pulvérisation à haute pression étant formé dans une forme de tuyau située dans la chambre (100) et disposé sous la grille d'agitation (126) et configuré pour éliminer les déchets alimentaires pris dans les perforations (127) de la grille d'agitation (126) en pulvérisant de l'eau amenée depuis l'extérieur vers la grille d'agitation (126) à une pression d'eau prédéterminée.

2. L'appareil de traitement de déchets alimentaires selon la revendication 1, comprenant en outre :
une première paroi de séparation (1604) formée sur un premier côté de l'unité (160) d'écoulement vers l'intérieur ;
une deuxième paroi de séparation (1606) formée sur un deuxième côté de l'unité (160) d'écoulement vers l'intérieur ;
un premier arbre rotatif (1624) formé pour être orthogonal sur un premier côté de la première paroi de séparation (1604) et de la deuxième paroi de séparation (1606), une première lame de pulvérisation (1626) entraînée en rotation par un premier moteur (1622) étant formée sur le premier arbre rotatif (1624) ; et
un deuxième arbre rotatif (1614) fixé à la première paroi de séparation (1604) et à la deuxième paroi de séparation (1606), espacé du premier arbre rotatif (1624) selon un intervalle spécifique, et disposé de façon parallèle au premier arbre rotatif (1624), une deuxième lame de pulvérisation (1616) étant formée sur le deuxième arbre rotatif (1614) et en engagement avec la première lame de pulvérisation (1626).

3. L'appareil de traitement de déchets alimentaires selon la revendication 1, comprenant en outre :
une unité formant bouton située sur une surface avant de la chambre (100), un ou plusieurs boutons étant formés dans l'unité formant bouton ; et
une unité formant substrat configurée pour avoir un ou plusieurs commutateurs formés sur une surface avant de l'unité formant substrat et configurée pour générer un signal spécifique correspondant à un commutateur spécifique lorsque le commutateur spécifique correspondant à un bouton spécifique est pressé en appuyant sur le bouton spécifique, et pour entraîner la chambre (100) en réponse au signal spécifique,
les commutateurs et les boutons étant disposés pour correspondre les uns aux autres.

4. L'appareil de traitement de déchets alimentaires selon la revendication 1, comprenant en outre un dispositif d'alimentation en eau de pulvérisation formé dans une forme de tuyau dans la chambre (100), disposé sur la grille d'agitation (126) et configuré pour pulvériser de l'eau fournie extérieurement ou des microbes sur les déchets introduits au niveau de la grille d'agitation (126) en pulvérisant l'eau ou les microbes à une pression d'eau prédéterminée,
des trous de pulvérisation en ligne droite ou en forme de croix pour la pulvérisation d'eau étant formés d'un côté du dispositif d'alimentation en eau de pulvérisation.

5. L'appareil de traitement de déchets alimentaires selon la revendication 1, comprenant en outre :
une unité (200) d'alimentation en liquide microbien comprenant un corps de récipient (210) dans lequel le liquide microbien est stocké, et un couvercle de récipient (220) relié à une extrémité du corps de récipient (210), un premier trou d'entrée (224), au travers duquel de l'eau est reçue, et un premier trou de sortie (222), à partir duquel de l'eau ou un liquide microbien est délivré, étant formés dans le couvercle de récipient (220) ;
un élément chauffant électrique inséré dans le corps de récipient (210) et configuré pour chauffer le liquide microbien pendant une durée prédéterminée à chaque période prédéterminée ;
une unité de projection de liquide microbien disposée sur un côté de la chambre (100) et configurée pour comprendre une première valve (132) pour relier un tuyau externe d'alimentation en eau et un premier tuyau (225) d'alimentation en eau et fournissant de l'eau, un premier tuyau (225) d'alimentation en eau pour transférer de l'eau délivrée par la première vanne (132) vers le premier trou d'entrée (224), et un deuxième tuyau (223) d'alimentation en eau pour transférer de l'eau ou un liquide microbien délivré par le premier trou de sortie (222) vers un deuxième trou d'entrée (192) formé dans une bouteille d'eau (190) ;
la bouteille d'eau (190) étant formée dans une forme de corps de boîte vide, le deuxième trou d'entrée (192) étant formé sur un premier côté de la bouteille d'eau (190) et un deuxième trou de sortie (196) étant formé sur un deuxième côté de la bouteille d'eau (190) ; et
une unité de pulvérisation formée sur une paroi intérieure sur un côté de la chambre (100) et configurée pour comprendre un premier dispositif (182) d'alimentation en eau de pulvérisation pour pulvériser de l'eau ou un liquide microbien délivré par le deuxième trou de sortie (196) en direction de la grille d'agitation (126).

6. L'appareil de traitement de déchets alimentaires selon la revendication 1, comprenant en outre :
un liquide microbien de type capsule (300) appartenant à un liquide et comprenant une capsule de film d'huile (310), la capsule de film d'huile (310) étant éclatée par une force externe générée par la rotation des lames d'agitation (122), et des microbes situés à l'intérieur de la capsule de film d'huile (310) sont pulvérisés et agités avec les déchets alimentaires ;
une unité (200) d'alimentation en liquide microbien comprenant un corps de récipient (210) dans lequel le liquide microbien est stocké et un couvercle de récipient (220) relié à une extrémité du corps de récipient (210), un premier trou d'entrée (224), au travers duquel de l'eau est reçue, et un premier trou de sortie (222) à partir duquel de l'eau ou un liquide microbien est délivré, étant formés dans le couvercle de récipient (220) ;
une unité de projection de liquide microbien disposée sur un côté de la chambre (100) et configurée pour comprendre une première valve (132) reliant un tuyau externe d'alimentation en eau et un premier tuyau (225), et fournissant de l'eau, un premier tuyau (225) d'alimentation en eau pour transférer l'eau évacuée par la première vanne (132) vers le premier trou d'entrée (224), et un deuxième tuyau d'alimentation en eau (223) pour transférer de l'eau ou un liquide microbien délivré par le premier trou de sortie (222) vers un deuxième trou d'entrée (192) formé dans une bouteille d'eau (190) ;
la bouteille d'eau (190) étant formée dans une forme de corps de boîte vide, le deuxième trou d'entrée (192) étant formé sur un premier côté de la bouteille d'eau (190) et un deuxième trou de sortie (196) étant formé sur un deuxième côté de la bouteille d'eau (190) ; et
une unité de pulvérisation formée sur une paroi intérieure sur un côté de la chambre (100) et configurée pour comprendre un premier dispositif (182) d'alimentation en eau de pulvérisation pour pulvériser de l'eau ou un liquide microbien délivré par le deuxième trou de sortie (196) vers la grille d'agitation (126).

7. L'appareil de traitement de déchets alimentaires selon la revendication 1, comprenant en outre :
une unité (200) d'alimentation en liquide microbien comprenant un corps de récipient (210) dans lequel le liquide microbien est stocké et un couvercle de récipient (220) relié à une extrémité du corps de récipient (210), un premier trou d'entrée (224), au travers duquel de l'eau est reçue, et un premier trou de sortie (222), depuis lequel de l'eau ou un liquide microbien est délivré, étant formés dans le couvercle de récipient (220) ;
une unité de projection de liquide microbien disposée sur un côté de la chambre (100) et configurée de façon à comprendre une première vanne (132) pour raccorder un tuyau d'alimentation externe en eau et un premier tuyau (225) d'alimentation en eau, et alimentant en eau, un premier tuyau (225) d'alimentation en eau pour transférer de l'eau délivrée par la première vanne (132) au premier trou d'entrée (224), et un deuxième tuyau (223) d'alimentation en eau, pour transférer de l'eau ou un liquide microbien délivré par le premier trou de sortie (222) vers un deuxième trou d'entrée (192) aménagé dans une bouteille d'eau (190),
la bouteille d'eau (190), formée dans un corps de boîte vide, le deuxième trou d'entrée (192) étant formé sur un premier côté de la bouteille d'eau (190) et un deuxième trou de sortie (196) étant formé sur un deuxième côté de la bouteille d'eau (190) ;
une unité de chauffage disposée à l'intérieur ou à l'extérieur de la bouteille d'eau (190) et adaptée pour maintenir une température constante en appliquant de la chaleur à de l'eau ou un liquide microbien reçu depuis le deuxième trou d'entrée (192) à travers un coussin chauffant pour générer de la chaleur pendant une durée prédéterminée à chaque instant prédéterminé ; et
une unité de pulvérisation formée sur une paroi intérieure d'un côté de la chambre (100) et configurée pour comprendre un premier dispositif (182) d'alimentation en eau de pulvérisation pour pulvériser de l'eau ou un liquide microbien délivré par le deuxième trou d'écoulement (196) en direction de la grille d'agitation (126).

8. L'appareil de traitement de déchets alimentaires selon la revendication 1, dans lequel :
la chambre (100) comprend :
un arbre d'agitation (124) auquel une pluralité des lames d'agitation (122) est fixée à angle droit ;
un moteur d'agitation (120) relié à une extrémité de l'arbre d'agitation (124) pour faire tourner un arbre d'agitation (124) ;
un capteur de température (150) configuré pour générer des données de mesure de température en mesurant une température du moteur d'agitation (120) et pour envoyer les données de mesure de température à une unité (1100) de commande de moteur d'agitation ; et
une unité de commande (1000) configurée pour commander le moteur d'agitation (120), et
l'unité de commande (1000) comprend l'unité (1100) de commande de moteur d'agitation configurée pour entraîner le moteur d'agitation (120) en envoyant un signal d'actionnement au moteur d'agitation (120) au moteur d'agitation (120), pour recevoir les données de mesure de température provenant du capteur de température (150), et pour commander une vitesse de rotation du moteur d'agitation (120) en fonction des résultats de la mesure de température.

9. L'appareil de traitement de déchets alimentaires selon la revendication 1, dans lequel :
la chambre (100) comprend :
une unité formant vanne comprenant une première vanne (132), une deuxième vanne (134) et une troisième vanne (136) et configurée pour pulvériser de l'eau à une pression d'eau prédéterminée ; et
une unité de commande (1000) configurée pour commander un moteur d'agitation (120) et l'unité formant vanne, et
l'unité de commande (1000) comprend :
une unité (1100) de commande de moteur d'agitation configurée pour entraîner le moteur d'agitation (120) et pour commander une vitesse de rotation du moteur d'agitation (120) en envoyant au moteur d'agitation (120) un signal d'actionnement de moteur d'agitation (120) ;
une unité (1000) de commande d'unité formant vanne configurée pour entraîner l'unité formant vanne et pour commander la pression de l'eau de l'unité formant vanne en envoyant à l'unité formant vanne un signal de fonctionnement d'unité formant vanne ;
une unité de stockage de données de moteur d'agitation (120) configurée pour mémoriser un historique dans lequel le signal de fonctionnement du moteur d'agitation (120) a été transmis au moteur d'agitation (120) depuis l'unité (1100) de commande de moteur d'agitation, et un historique dans lequel la vitesse de rotation du moteur d'agitation (120) a été commandée en tant que données de moteur d'agitation (120) sur une plage de temps déterminée ;
une unité (1220) de stockage de données d'unité formant vanne configurée pour mémoriser un historique dans lequel le signal de fonctionnement de l'unité formant vanne a été transmis depuis l'unité (1000) de commande de l'unité formant vanne, et un historique dans lequel la pression d'eau de l'unité formant vanne a été commandée en tant que données d'unité formant vanne sur une plage de temps déterminée ; et
une unité (1300) de détermination d'anomalie configurée pour comparer un état de fonctionnement du moteur d'agitation (120) avec les données de moteur d'agitation (120), pour déterminer qu'une anomalie s'est produite dans le moteur d'agitation (120) si, suite à la comparaison, l'état de fonctionnement du moteur d'agitation (120) apparaît ne pas être identique aux données du moteur d'agitation (120), pour envoyer un signal d'arrêt du moteur d'agitation (120) à l'unité (1100) de commande du moteur d'agitation de sorte que le fonctionnement du moteur d'agitation (120) est arrêté, pour comparer un état de fonctionnement de l'unité formant vanne avec les données de l'unité formant vanne, pour déterminer qu'une anomalie s'est produite dans l'unité formant vanne si, en tant que résultat de la comparaison, l'état de fonctionnement de l'unité formant vanne apparaît ne pas être identique aux données de l'unité formant vanne, et pour envoyer un signal d'arrêt de l'unité formant vanne à l'unité (1000) de commande de l'unité formant vanne de sorte que le fonctionnement de l'unité formant vanne soit arrêté.

10. L'appareil de traitement de déchets alimentaires selon la revendication 1, dans lequel :
la chambre (100) comprend :
un arbre d'agitation (124) auquel une pluralité des lames d'agitation (122) est fixée à angle droit ; et
un moteur d'agitation (120) relié à une extrémité de l'arbre d'agitation (124) pour faire tourner un arbre d'agitation (124), et
l'unité de commande comprend :
une unité (1100) de commande de moteur d'agitation configurée pour entraîner le moteur d'agitation (120) et pour commander une vitesse de rotation du moteur d'agitation (120) en envoyant au moteur d'agitation (120) un signal d'actionnement de moteur d'agitation (120) ;
une unité (1000) de commande d'unité formant vanne configurée pour entraîner l'unité formant vanne et commander la pression d'eau de l'unité formant vanne en envoyant un signal de fonctionnement d'unité formant vanne à l'unité formant vanne ;
une unité de stockage de données de moteur d'agitation (120) configurée pour mémoriser un historique dans lequel le signal de fonctionnement du moteur d'agitation (120) a été transmis depuis l'unité (1100) de commande de moteur d'agitation vers le moteur d'agitation (120), et un historique dans lequel la vitesse de rotation du moteur d'agitation (120) a été commandée en tant que données de moteur d'agitation (120) sur une plage de temps déterminée ; et
une unité (1220) de stockage de données d'unité formant vanne configurée pour mémoriser un historique dans lequel le signal de fonctionnement de l'unité formant vanne a été transmis depuis l'unité (1000) de commande de vanne à l'unité formant vanne et un historique dans lequel la pression d'eau de l'unité formant vanne a été commandé en tant que données d'unité formant vanne sur une plage de temps définie.

11. L'appareil de traitement de déchets alimentaires selon la revendication 1, comprenant en outre une unité de commande configurée pour commander un fonctionnement de l'appareil de traitement de déchets alimentaires,
dans lequel l'unité de commande comprend :
une unité de communication (1600) configuré pour recevoir des données de mise à jour de micrologiciel provenant d'un serveur de mise à jour de micrologiciel ; et
un module de micrologiciel (1500) configuré pour stocker des données de microprogramme pour commander le dispositif de traitement de déchets alimentaires et pour mettre à jour des données de microprogramme existantes avec des données de mise à jour de microprogramme lorsque les données de mise à jour du microprogramme sont reçues depuis le serveur de mise à jour de micrologiciel via l'unité de communication (1600), et
le serveur de mise à jour de micrologiciel envoie les données de mise à jour du micrologiciel au module de micrologiciel (1500) via l'unité de communication (1600).

12. L'appareil de traitement de déchets alimentaires selon la revendication 1, comprenant en outre un dispositif d'alimentation en eau de pulvérisation formé dans une conduite depuis l'intérieur de la chambre (100), disposé sur la grille d'agitation (126) et configuré pour pulvériser de l'eau ou des microbes alimentés depuis l'extérieur sur des déchets alimentaires amenés sur la grille d'agitation (126) en pulvérisant l'eau ou les microbes à une pression d'eau prédéterminée,
le dispositif d'alimentation en eau pulvérisée étant formé selon une forme cylindrique, un trou de pulvérisation circulaire étant formé au centre d'une surface supérieure du dispositif d'alimentation en eau de pulvérisation, et une paroi intérieure sur la surface supérieure et une paroi intérieure sur un côté formant un angle d'inclinaison.
